# EUROPEAN PATENT APPLICATION

(11) **EP 4 148 421 A1**
(43) Date of publication of application: **15.03.2023**
(21) Application number: 21196158.6
(22) Date of filing: 10.09.2021
(51) Int. Cl.: G01N 23/20025, G01N 23/207

(54) **SAMPLE HOLDER ARRANGEMENT FOR STRUCTURE ELUCIDATION WITH POROUS FRAMEWORKS**

(71) Applicant: Merck Patent GmbH, 64293 Darmstadt (DE); Rigaku Corporation, Akishima-shi, Tokyo 196-8666 (JP)
(72) Inventor: KUEHN, Clemens, 64293 Darmstadt (DE); JENNICHES, Judith, 64293 Darmstadt (DE); SATO, Takashi, Tokyo, 196-8666 (JP)
(74) Representative: Merck Serono S.A. Intellectual Property

(57) **Abstract**

The invention provides a sample holder arrangement (1) comprising (a) a sample holding part (3) and (b) a base part (30), wherein the sample holding part (3) comprises an open-ended tube (10), wherein the open-ended tube (10) comprises a first tube end (11) and a second tube end (19), wherein the open-ended tube (10) comprises a narrowing part (15), wherein in the narrowing part (15) an internal tube dimension reduces in a direction from the first tube end (11) to the second tube end (19), wherein a single crystal of a porous framework (20) is arranged within the open-ended tube (10) between the first tube end (11) and the second tube end (19), and wherein dimensions of the narrowing part (15) and dimensions of the single crystal of the porous framework (20) are chosen such that the single crystal of the porous framework (20) cannot escape from the open-ended tube (10) via the second tube end (19); and wherein the base part (30) is configured to host the sample holding part (3), wherein the sample holding part (3) is detachably associated to the base part (30).

## Description

### FIELD OF THE INVENTION

The invention relates to a sample holder for structure elucidation with porous frameworks. The invention further relates to a sample preparation method and to an X-ray analysis method. The invention further relates to a system, which may be used for such method(s).

### BACKGROUND OF THE INVENTION

Methods for determining molecular structure of a compound to be analyzed using porous frameworks as well as sample holders for such porous frameworks are known in the art. EP3269849, e.g., describes a single crystal of a porous compound, the single crystal being used to produce a crystal structure analysis sample for a compound to be analyzed by contacting the single crystal of the porous compound having a three-dimensional framework and three-dimensionally regularly-arranged pores and/or hollows formed by being divided by the three-dimensional framework with a solution that includes the compound to be analyzed, and arranging molecules of the compound to be analyzed in a regular array in the pores and/or hollows.

### SUMMARY OF THE INVENTION

Molecule structure elucidation may make use of a crystalline porous network or a crystalline sponge. A crystal suited for single crystal X-ray crystallography may be infused with the molecule to be analyzed and can then be structurally characterized by conventional X-ray crystallography, thus elucidating the structure of the analyte.

Known protocols for the process of inclusion of the analyte into the network (soaking) may require placing a small crystal (< 200 µm in size) into a special glass vial with a conical bottom or inset. The crystal may need to be manipulated under a microscope with suitable tools to place it directly into the center of the vial (the lowest part of the conus). A dilute solution of the analyte in a solvent or solvent mixture may be added and very slowly evaporated. The slow evaporation is accomplished by sealing the soaking vial with a cover featuring a septum, which is then pierced with a syringe needle of defined inner diameter to allow evaporation at a defined rate. After this process, the crystal needs to be harvested with micro-manipulation tools under a microscope from the conus at the bottom of the vial to place it onto a suitable sample holder for single crystal X-ray diffraction.

The micro-manipulation before and after the soaking requires special tools and a lot of experience in handling of vials and crystals in order to focus the crystal and not to destroy them with the tools. Above that, the crystals should not lose solvent during that process, so there may only be a limited amount of time available to successfully harvest the crystal.

Alternative solutions may use a sample holder enabling soaking within a glass capillary in a configuration that may be mounted on a diffractometer, thereby eliminating the need to manipulate the crystal under a microscope. However, known solutions require closed capillaries for soaking. In such capillaries, exposure of the crystal to an analyte solution may be difficult to accomplish and may require diffusion processes over the whole length of the capillary. Bubbles of gas like air have to be avoided in this concept as they will present an undesirable diffusion barrier.

Also integration in existing workflows such as HPLC or GC fractionation and sample robotics may be limited by the adaptability of the consumable design and/or the robotics. Especially, the design of the capillary confines the range of volumes, which can be used for the analyte solution. In a possible capillary configuration, a cylindrical tube may be closed at the bottom, and the crystal will be located on the bottom of the capillary. Upon closing the capillary, the formation of a glass droplet may technically be hard to avoid. Measurements may be hampered by the high absorption of X-rays in glass especially in the mass of glass material at the bottom of the capillary, where the crystal is located.

Further, prior art solutions may be impractical with regards to one or more of productivity, transport, handling, soaking and measurement. For instance, with regards to transport, handling and soaking, a crystal may get displaced during transport or soaking, or may even escape from a sample holder altogether. With regards to measurement, such as during x-ray measurement, sample holders may be cooled, such as via exposure to ultradry N₂ (e.g., at 100 K), to reduce radiation damage and thermal vibrations. However, the cooling may result in the formation of ice crystals and flakes, which may contaminate the objective diffraction patterns by overlaying strong diffraction spots.

Hence, it is an aspect of the invention to provide an alternative sample holder arrangement, which preferably further at least partly obviates one or more of above-described drawbacks. It is a further aspect of the invention to provide an alternative sample preparation method, which preferably further at least partly obviates one or more of above-described drawbacks. Alternatively or additionally, it is an aspect of the invention to provide an alternative X-ray analysis method, which preferably further at least partly obviates one or more of above-described drawbacks. It is yet a further aspect of the invention to provide an alternative system, especially for preparing a sample and/or for X-ray analysis of a sample, which preferably further at least partly obviates one or more of above-described drawbacks. The present invention may have as object to overcome or ameliorate at least one of the disadvantages of the prior art, or to provide a useful alternative.

Hence, in a first aspect the invention provides a sample holder arrangement. Further, especially, in embodiments, the sample holder arrangement is (configured) for use in structure elucidation with porous frameworks. In specific embodiments, the sample holder arrangement comprises a sample holding part and a base part. In further embodiments, the base part may be configured to host the sample holding part. Further, especially, in embodiments the sample holding part is detachably associated to the base part. The sample holding part especially comprises an open-ended tube ("tube" or "open tube"). The open-ended tube may in embodiments comprise a first (especially open) tube end ("first tube end") and a second (especially open) tube end ("second tube end"). In embodiments, the open-ended tube is configured for accommodating (and keeping) a single crystal of a porous framework ("single crystal", "single porous crystal", "porous crystal" or simply "crystal"), (inside the open-ended tube, especially in an internal volume - or space - of the open-ended tube), especially between the first tube end and the second tube end. In further specific embodiments, dimensions of the open-ended tube are selected to prevent the single crystal of the porous framework from escaping from the open-ended tube via the second tube end. In embodiments, an opening (or inner cross section) of the first tube end is especially larger than an opening (or inner cross section) of the second tube end. In further embodiments, the second tube end may be partly closed. The open-ended tube may in further embodiments comprise a narrowing. In further specific embodiments, the open-ended tube comprises a narrowing part. In embodiments, the narrowing (part) is arranged (at a predetermined location) between the first tube end the second tube end. Further, especially, in the narrowing part an internal tube dimension reduces in a direction from the first tube end to the second tube end. In further specific embodiments, the narrowing part comprises the second tube end. Further, especially, the single crystal of the porous framework is arranged within the open-ended tube between the first tube end and the second tube end. In specific further embodiments, dimensions of the open-ended tube, especially dimensions of the narrowing part, and dimensions of the single crystal of the porous framework are chosen such that the single crystal of the porous framework cannot escape from the open-ended tube via the second tube end.

The sample holder arrangement of the invention may address the drawbacks of the prior art. The invention especially provides in embodiments a special sample holder arrangement combining the possibility to soak and measure without micro-manipulation of the single crystal. Moreover, this may be done in embodiments while retaining use of standard vials or sample containers. The arrangement can especially be easily integrated with existing fractionation robotics. Especially, the open-ended tube (herein also referred to as "open tube", "tube", "capillary", and comparable terms) is open at the bottom. As a result, the typical increased mass of highly absorbing material present at the bottom of prior art tubes that may hamper the measurement may be avoided. For soaking, the tube/capillary may in embodiments be placed in a standard sample vial, dipping into the surface of the sample solution. As especially both ends are open, gas bubbles are no issue as they can be "pushed out" in the process. Also the path of diffusion for the analyte is much shorter as the solution enters from the bottom of the capillary. Further, capillary effects may in embodiments provide a steady flow of analyte to the crystal. In addition, the sample holding part may be shaped such as to (substantially) reduce ice formation on the sample holding part during use, while maintaining mechanical stability. In particular, ice formation may be (substantially) reduced due to the narrowing of the open-ended tube towards the first tube end. Further, mechanical stability may be improved via a suitable choice of materials used in the sample holding part and a (well-fitting) functional coupling between the sample holding part and the base part (see below).

The capillary may in embodiments feature a narrowing part ("first narrowing part") or e.g. a partially closed end at the bottom, to fix the crystal in place due to the narrow cross section and prevent it from dropping out of the capillary. In embodiments, dipping the second tube end into the lowest part of a standard conical bottom vial (especially in combination with the capillary effect) may serve for the crystal to be exposed to the analyte solution for soaking.

Further, the presence of a second narrowing part between a target location for the crystal and the first tube end (see below) may facilitate maintaining the crystal at the target location during transport, handling, and soaking.

Moreover, on the first tube end, the capillary may in embodiments be combined with a (standard) base part for attachment to (standard) goniometer heads of single crystal X-ray diffractometers. In embodiments, the base part may be configured for functional coupling to a base part adapter or goniometer head, especially for (physically) being arranged on the base part adapter or the goniometer head. A base part adapter may in embodiments be used to functionally couple the base part to a goniometer head (which may especially be part of a single crystal X-ray diffractometer). Hence, in embodiments the base part may be configured attachable to a goniometer head of an X-ray system. This may be either directly or via a base part adapter. In further embodiments, the base part may comprise the base part adapter. This may facilitate easy integration with existing measurement devices including respective sample robotics. The combination of the tube arranged in the base part or the base part adapter may be provided to/with the solvent. The sample holder arrangement, especially the base part, may optionally also comprise a septum of a suitable screw cap or crimp cap, especially configured around the tube (between the second end the first end). This may ease application of the second tube end in the solvent and especially having the crystal and capillary tip at the pre-determined height within the vial. This may in embodiments further not require use of an additional needle (to provide an open connection evaporation).

In embodiments, the base part or the base part adapter may especially comprise a magnetic (metal) material, especially (stainless) steel. Other materials, however, may also be possible.

Hence, the invention provides in embodiments, a sample holder arrangement (for use in structure elucidation with porous frameworks) comprising (a) a sample holding part and (b) a base part, wherein the sample holding part comprises an open-ended tube, wherein the open-ended tube comprises a first tube end and a second tube end, wherein the open-ended tube comprises a narrowing part, especially comprising the second tube end, wherein in the narrowing part an internal tube dimension reduces in a direction from the first tube end to the second tube end, wherein a single crystal of a porous framework is arranged within the open-ended tube (between the first tube end and the second tube end), wherein dimensions of the narrowing part and dimensions of the single crystal of the porous framework are chosen such that the single crystal of the porous framework cannot escape from the open-ended tube via the second tube end; and especially wherein the base part is configured to host the sample holding part, wherein the sample holding part is detachably associated to the base part.

The sample holding part (herein also indicated as "sample holder") is especially detachably associated to the base part. The base part may host the sample holding part. The base part may hold, support or e.g. clamp the sample holding part. The base part may in embodiments at least partly enclose the sample holding part. The base part may especially be associated with the sample holding part for allowing to manipulate or handle the sample holding part in the method of the invention. The base part may e.g. facilitate manipulation of the open-ended tube during and/or after arranging through the cap (during soaking) or during analysis, e.g. during the sample preparation method and/or the analysis method described herein (see below). The base part may in embodiments also be indicated as "manipulation structure". In embodiments, the open-ended tube may be in fluid connection from the first tube end and from the second tube end (optionally via the base part) with locations external of the arrangement. In embodiments, the first tube end is not closed by the base part. Additionally or alternatively, the second tube end may not be closed by the base part. In further specific embodiments, the base part may close one or more of the first tube end and the second tube end. The base part may in further specific embodiments (also) comprise a container for the sample holding part (see below).

The base part and the sample holding part may in embodiments have a (mutually complementary) thread allowing to screw the base part to the sample holding part (and especially also allowing to unscrew the parts from each other again). The respective parts may in further embodiments comprise complementary (bayonet) elements for defining a (bayonet) mount, especially allowing to associate the parts (and further especially to disassociate the parts (again)). In yet further embodiments, the sample holding part may be press fitted to (in) the base part. In further specific embodiments the sample holding part may be at least partly deformable and the sample holding part may be (partly) squeezed in the base part. Additionally or alternatively, the base part may at least be partly deformable allowing to squeeze the sample holding part to be (partly) squeezed in or to the base part. In embodiments, the sample holding part may comprise elements for associating the sample holding part to the base part. Additionally or alternatively the base part may comprise elements for associating with the sample holding part (especially being complementary to the elements comprised by the sample holding part). The element may e.g. comprise a mechanical element such as described above and/or a friction element. The elements may comprise magnetic elements.

Hence, in embodiments, the sample holding part may be detached from the base part and e.g. be replaced by a further sample holding part. The sample holding part may e.g. comprise a disposable sample holder (see below). Likewise, in further embodiments, the sample holding part may (after detaching) be associated with a further base part. For instance, a further base part may comprise a base part adapter or may comprise a base part that may be functionally coupled to the base part or the base part adapter (see below).

In embodiments (further) a seal or gasket may be configured between the sample holding part and the base part to provide a seal association (between the respective parts). Such seal may be (an embodiment of) a friction element. The seal may in embodiments comprise a viscous material and/or a liquid gasket. In further embodiments a silicone (e.g., mastic or sealant) or another type of kit may be configured between the base part and the sample holding part (to associate the parts).

In further specific embodiments, the sample holding part may be configured for detachable association to the base part.

For instance, in embodiments the open-ended tube may in embodiments comprise an external connection structure. The connection structure may e.g. comprise a groove, a thread or a rim (especially at a location of the first tube end for connecting to base part).

The connection structure may comprise a seal or sealant as described above. Basically, the connection structure may comprise one or more elements described above in relation to (elements for) associating the sample holding to the base part. The base part may facilitate handling or manipulation of sample holding part, especially the open-ended tube. The base part may ease handling and especially automation of the handling, and especially avoiding damaging the open-ended tube.

Hence, in embodiments, the sample holder arrangement comprises the base part, wherein the open-ended tube comprises an external connection structure, wherein the external connection structure is configured for positioning and securing the open-ended tube to the base part.

Yet, in embodiments the open-ended tube may be configured detachable to the base part. Especially, in an attached configuration the open-ended tube may be fixated in the base part. As also indicated elsewhere herein, in specific embodiments the base part may be attached to a goniometer head, directly or via a base part adapter.

Further, "the term "base part" may refer to different base parts. Likewise, the term "sample holding part" may refer to different sample holding parts. The arrangement especially comprises a single sample holding part. The arrangement may comprise more than one (different) base parts.

The open-ended tube (herein also referred to as "tube" or "capillary") may be open at the first tube end and at the second tube end. In embodiments, the (open-ended) tube is an elongated tube, especially having a (longitudinal) tube axis (between the first tube end and the second tube end). The open-ended tube essentially comprises a tube wall defining the open-ended tube. The tube wall may define a total length L1 of the tube. The tube wall further may define characteristic dimensions/sizes of the open-ended tube, e.g. a diameter or a cross sectional area, see further below, and a shape of the tube. In further embodiments, an internal (open-ended tube) volume is defined by the tube wall. Further, the tube is especially (substantially) dimensionally stable (during use). Dimensions of the tube, such as a length of the tube and a (local) flow through area and an internal volume may in embodiments substantially not change during use (based on operation conditions or a sample and/or solvent in the tube). Yet, during assembly of the arrangement, such as during association of the base part and the sample holding part or during/after providing the crystal to the tube (see below) dimensions may change in embodiments. Accordingly, a shape of the tube may (substantially) be constant (during use). The tube is especially a rigid tube. The term "tube wall" may refer to more than one tube wall and/or more than one tube wall segment.

Especially, in embodiments an external tube dimension (like diameter) may reduce in a direction from the first tube end to the second tube end. Hence, the tube wall may have a tapering shape, wherein the internal tube dimension (like diameter) may reduce in a direction from the first tube end to the second tube end and wherein an external tube dimension reduces in a direction from the first tube end to the second tube end. With the tapering external tube dimensions, together with the combination of the conical shape of the base part, the turbulence of cooling gas flow may be suppressed and thus icing, due to which degradation of the data quality may otherwise arise, may be reduced, especially be prevented.

The tube is further especially configured for accommodating the single crystal of a porous framework (herein further also referred to as "crystal", "single porous crystal", "single crystal", "porous crystal", and similar terms, see further below). The tube is especially configured for preventing the single crystal (of the porous framework) from escaping (such as based on gravity) from the tube via the second tube end, as described above. The tube may in further embodiments be configured for providing the tube with the crystal via the first tube end. Alternatively, the tube may (also) be configured for preventing the porous crystal from escaping from the tube via the first tube end. In embodiments (for providing the single crystal in the open-ended tube) the crystal may be provided via the first tube end and successively the open-ended tube may be modified such that the single crystal can (also) not escape from the first tube end. The tube may in embodiments be compressed (to reduce the flow through area) at a location between the first tube end and the crystal (after providing the crystal to the tube) to prevent escaping of the crystal from the first tube end. This way a (flow) constriction may be provided. In further embodiments an adhesive material may be provided to the crystal or the tube to retain the crystal in the tube. Additionally or alternatively a physical barrier may be provided to the tube from the first tube end after having provided the crystal. The physical barrier may especially be selected for not completely sealing the tube at a location between the first tube end and the crystal. The physical barrier may e.g. comprise silica gel. Additionally or alternatively, a gas flow may be provided to the tube via the first tube end to prevent escaping of the crystal from the tube (during handling) from the first end, e.g., due to gravity. Likewise, a partial vacuum (or gas suction) may be provided from the second tube end.

In embodiments, a characteristic size nearest to (and including) the first tube end is larger than the respective characteristic size nearest to (and including) the second tube end. The term "characteristic size" may especially refer to an internal tube dimension. The characteristic size may for instance relate to an inner cross-sectional area, a flow through area, a (inner) width, or a (inner) diameter, especially all perpendicular to the tube axis (axis of elongation of the tube). The characteristic size may in embodiments relate to a semi-major axis or a semi-minor axis of a substantially elliptically shaped tube. The characteristic size especially reduces in a direction from the first tube end to the second tube end. In embodiments, e.g. the first tube end may have a(n inner) tube diameter in the 100-micrometers range (e.g. 100 - 1000 µm) and especially the second tube end may have a(n internal) tube diameter in the micrometers range (e.g. 1-10 µm). Especially, the characteristic size reduces in the narrowing part. The first tube end does not necessarily have the largest inner dimension or characteristic size (of the tube). Further, the second tube end does not necessarily have the smallest inner dimension or characteristic size. For instance, at an extreme of the narrowing part closest to the first tube end the inner dimension may in embodiments be larger than the inner dimension at the first tube end. Likewise, at an extreme of the narrowing part closest to the second tube end, the inner dimension may in embodiments be smaller than the inner dimension or characteristic size at the second tube end. One or more of the smallest inner dimension and the largest inner dimension of the tube may in embodiments be configured between the first tube end and the second tube end.

The tube (cross section) may essentially have any arbitrary shape. In embodiments, the tube (cross section) may have a circular shape. In further embodiments, the tube (cross section) may have an elliptical shape. The tube (cross section) may in further embodiments have a square shape, etc., etc. The term "characteristic size" or "characteristic dimension" in relation to the tube especially refers to the (local) inner dimension or size of the tube. The terms "shape" and "characteristic size" in relation to the tube may further refer to a plurality of different shapes and a plurality of different characteristic sizes, respectively. The cross-sectional shape may e.g. in embodiments vary along the length of the tube.

In embodiments, the characteristic size of an arbitrarily shaped tube, for instance a length of the semi-major or semi-minor axis, or a (inner) width of the tube, may have a value described herein in relation to the tube diameter or to the tube (largest) characteristic size. The (characteristic) sizes and dimensions of the tube described herein especially refer to inner (flow through) sizes and dimensions, especially perpendicular to the tube axis.

In further embodiments, the tube has a first characteristic size (or "characteristic dimension") at a first (longitudinal) location and a second characteristic size at a second (longitudinal) location. The first characteristic size may especially be larger than the second characteristic size, if the first location is closest (and including) to the first tube end and the second location is closest (and including) the second tube end. The tube may comprise a narrowing or a (flow) constriction between the first tube end and the second tube end. The narrowing (part) may essentially be arranged at any location between (and including) the first tube end and the second tube end. In specific embodiments, the narrowing part may comprise the first location and the second location.

Herein, the term "narrowing" in relation to the tube especially indicates that (the inner size of) the tube becomes narrower towards one end (especially the second tube end). The term not necessarily refers to gradually becoming narrower. The term may refer to a stepwise narrowing of the tube (flow through area). In embodiments, e.g. the tube may narrow in a single step. For instance the tube may comprise a first cross sectional area (or (first) flow through area) at the first tube end and a second cross sectional area ((second) flow through area) at the second tube end, and somewhere between the first tube end and the second tube end the flow through area in the tube changes in size form the first cross sectional area (size) to the second cross sectional area (size). Yet, in other embodiments, the flow through area in the tube may gradually change from the first cross sectional area to the second cross sectional area. The reduction in dimension may be configured in any arbitrary way.

In embodiments, the reduction in dimension comprises a single discrete (internal tube dimension) reduction. The narrowing part may in embodiments comprise a single discrete (internal tube dimension) reduction. In further embodiments, the dimension may be reduced in a plurality (two or more), such as 4, or 6, or even more steps. Yet, in even further embodiments, the size may be reduced (in the narrowing part) gradually. The narrowing part may have a tapering shape. The tube, especially the narrowing part, may in embodiments comprise a conical shape. The conical shape may extend from the first tube end to the second tube end. In further embodiments, the tube may comprise a conical part (somewhere) between the first tube end and the second tube end.

In specific embodiments, the tube comprises a tapering part, especially wherein the tapering parts tapers in a direction between the first tube end and the second tube end. In further specific embodiments, the tapering part comprises the second tube end. Additionally or alternatively, the tapering part (also) comprises the first tube end. In further embodiments dimensions of open-ended tube, especially of the tapering part, and dimensions of the single crystal of a porous framework are chosen such that the single crystal of a porous framework cannot escape from the open-ended tube via the second tube end.

Dimensions of one or more of the tube, the narrowing (part), the constriction, the conical tube, and the tapering part may especially be selected such that that the single crystal of the porous framework cannot escape from the open-ended tube via the second tube end. Herein, also the term "accommodating" (and keeping) in relation with the crystal may be used referring to the crystal that may not escape from the open-ended tube (via the second tube end). In embodiments, said dimensions are selected for blocking a movement of the crystal in the direction of the second tube end.

As discussed above, dimensions of the open-ended tube, especially dimensions of the narrowing part, and dimensions of the porous single crystal are in embodiments chosen such that the porous single crystal cannot escape from the open-ended tube via the second tube end. In embodiments, (comprising a circular/round tube) the (inner) diameter of the second tube end may be in the range of 0.5-10 µm, such as 1-10 µm, especially 1-5 µm. In further embodiments, the diameter of the first tube end is in the range of 50-1000 µm, such as 100-1000 µm, especially 100-500 µm. In such embodiments, the crystal may especially have a smallest size/dimension that is larger than the diameter (or any other characteristic dimension) of the tube at the second tube end. The crystal may have a (smallest) crystal dimension that is larger than a smallest tube (characteristic) dimension. For instance a width in one of the (3D) dimensions of the crystal may be larger than a smallest (internal) width or diameter of tube. The smallest crystal dimension may, in embodiments, be at least 0.5 µm, such as at least than 1 µm, especially at least 2 µm, such as at least 5 µm, or in embodiments at least 10 µm. In embodiments, the smallest crystal dimension may be smaller than 250 µm, such as 100 µm at maximum.

Herein the term "smallest" may be used in relation to the dimensions of the crystal, such as in the phrase "the smallest crystal dimension". The term especially relates to one of the dimensions in the 3D space that is smaller than any other of the dimensions. To determine the smallest dimension, the crystal may be rotated in all directions. The smallest crystal dimension may e.g. relate to a diameter for a spherical crystal, or e.g. to a width of an elongated crystal (wherein the width is smaller than a length). The smallest crystal dimension may refer to a diameter of a smallest enclosing cylinder of an elongated (irregularly) shaped crystal (but also of a regular or even spherical crystal). The smallest crystal dimension or size may refer to a diameter of a minimum bounding circle of the crystal, especially a smallest circle that completely contains the crystal (in a plane) in one of the 3D dimensions, especially in the smallest dimension. The smallest crystal dimension may relate to the diameter (dec) of the smallest enclosing cylinder of the crystal.

The term "smallest size/dimension" in relation to the tube may in embodiments relate to a smallest inner diameter (perpendicular to the tube axis) for a circular/round tube, or to a smallest inner width (perpendicular to the tube axis). The smallest tube dimension may in embodiments further relate to a smallest diameter of an incircle or inscribed circle of a cross section of the tube (in a plane perpendicular to the tube axis). The incircle or inscribed circle is especially the largest circle that can be contained in the cross section of the tube (at said plane). In embodiments, the first tube end has a first inscribed diameter (di1) of an inscribed circle of a cross section of the first tube end (perpendicular to the tube axis). Further, especially the second tube end has a second inscribed diameter (di2) of an inscribed circle of a cross section of the second tube end (perpendicular to the tube axis). In embodiments, di1>di2.

Additionally or alternatively, the characteristic dimension (or size) may be related to a circularly equivalent diameter. Herein, the term "circularly equivalent (inner) diameter" of an arbitrarily shaped (flat) surface especially refers to the diameter of a circular (flat) surface having the same size (in square (micro) meter) as the arbitrarily shaped (flat) surface. For instance, for a rectangular tube having flow through area (perpendicular to the tube axis) of 1 µm × 2 µm, the circularly equivalent diameter is about 1.6 µm (i.e., √(8/π)). In embodiments, the first tube end has a first circularly equivalent inner diameter d1 (perpendicular to an axis of elongation of the open-ended tube) and the second tube end has a second circularly equivalent inner diameter d2 (perpendicular to the axis of elongation), and especially d1>d2. Likewise, also the single crystal may have a circularly equivalent crystal diameter, especially a smallest circularly equivalent crystal diameter dc. In further specific embodiments, the single crystal of the porous framework has a smallest circularly equivalent crystal diameter dc, wherein the first tube end has a first circularly equivalent inner diameter d1 (perpendicular to the (elongated) tube axis), and the second tube end has a second circularly equivalent inner diameter d2 (perpendicular to the tube axis), wherein d1>dc>d2.

The single crystal may in embodiments have a smallest characteristic dimension (or size), especially a smallest circularly equivalent diameter, of at least 0.5 µm, such as at least 1 µm, especially at least 5 µm, such as at least 10 µm, even more especially at least 20 µm. The characteristic dimension (size) may especially be 1 mm, such as 500 µm, at maximum. In embodiments the characteristic dimension (size) of the single crystal is in the range of 1-750 µm, especially in the range of 1-500 µm, such as in the range of 1-250 µm. The smallest tube dimension may thus especially be smaller than the minimal characteristic dimension (size) of the single crystal described herein. In embodiments the smallest tube dimension, e.g. d2 is ≤ 80 µm, especially ≤ 70 µm, even more especially ≤ 50 µm. The smallest tube characteristic size, especially d2, is in embodiments at least 10 µm, such as at least 20 µm. Further, especially, a characteristic size at a location between the single crystal and the first tube end may be larger than maximum values described in relation to the characteristic dimension of the single crystal. In embodiments said tube characteristic dimension, e.g. d1, is in the range of 1-3 mm, such as about 2 mm. In embodiments especially for volatile solvents, said dimension may be less than 2 mm, such as in the range of 0.5-1.5 mm.

The smallest crystal dimension is especially also defined perpendicular to the tube axis. Hence, in embodiments the open-ended tube has an axis of elongation, wherein the single crystal of the porous framework has a (circularly equivalent) crystal diameter dc, especially a crystal diameter dc perpendicular to the axis of elongation.

In embodiments, the first circularly equivalent diameter (d1) is at least 1.05 times as large as the smallest circularly equivalent crystal diameter (dc). For instance, d1≥ 1.1^{∗}dc, such as ≥ 1.2^{∗}dc, especially ≥ 2^{∗}dc, or ≥ 5^{∗}dc. In embodiments d1≤50^{∗}dc, especially ≤20^{∗}dc. Yet in further embodiments, d1 may be larger, such as equal to or smaller than 200 times dc, or even larger. Further, especially dc is larger than d2, especially, dc ≥ 1.1^{∗}d2, such as ≥ 1.2^{∗}d2, especially dc ≥ 2^{∗}d2, or even ≥ 5^{∗}d2. In embodiments, dc≤20^{∗}d2. Yet in further embodiments, dc may be larger, such as equal to or smaller than 100 times d2 or even larger. In further embodiments, dc is in the range of 1-500 µm, such as 20-350 µm, especially 30-250 µm. Further, d1 is especially at least 1.1 µm. In embodiments d1 is in the range of 100-5000 µm, such as 100-2000 µm, especially 200-1000 µm, such as 300-800 µm. Additionally, d2 is especially equal to or smaller than 100 µm, such as ≤ 75 µm, e.g. ≤ 50 µm, more especially ≤ 30 µm, such as ≤ 15 µm, especially ≤ 5µm.

Additionally or alternatively, the single crystal may have a diameter (dec) of a smallest enclosing cylinder of the single crystal, the first tube end may have a first inscribed diameter (di1) of a (largest) inscribed circle of a cross section of the first tube end (perpendicular to the tube axis), and the second tube end may have a second inscribed diameter (di2) of a (largest) inscribed circle of a cross section of the second tube end (perpendicular to the tube axis), wherein di1>dec>di2. Moreover, di1 may be in the same range as described above with regard to d1. Furthermore, also di2 may be in the same range as described with regard to d2. Also dec may be in the same range as described in relation to dc.

Especially, with such configurations, the crystal may be provided with an analyte based on capillary forces when arranging the second tube end in a solvent comprising the analyte / the sample (see further below). The crystal may further be provided with the analyte based on arranging the crystal (in the tube) below a surface level of the solvent comprising the analyte.

The term "narrowing (part)" and similar terms may relate to a plurality of narrowings / narrowing parts. The tube may in embodiments comprise more than one (different) narrowing parts. The tube may in further embodiments, comprise two narrowing parts. Especially the two narrowing parts may be configured for preventing the single crystal to escape from the tube via the first tube and via the second tube end. In embodiments, a further narrowing (part) (or "narrowed section") is configured after providing the crystal into the tube (see also above).

The crystal may further be arranged at a distance d31 from the first tube end. The crystal may be arranged at a distance d32 from the second tube end. In embodiments, the open-ended tube may especially be configured such that the crystal is arranged at a distance d32 from the second tube end, wherein d32 is ≥ 0 µm (zero µm indicating that the crystal is at the second tube opening), especially d32 > 0, such as ≥ 100 µm especially ≥ 500 µm, such as ≥ 1 mm, especially ≥ 2 mm, such as ≥ 3 mm or even ≥ 4 mm. The distance d32 is in embodiments equal to or less than 10 mm, especially equal to or less than 5 mm, such as equal to or less than 3 mm. In embodiments, d32 is 2 mm at maximum, e.g. 1 mm at maximum. The distance d32 may in embodiments be in the range of 0.1 - 5 mm, especially 0.5-2 mm. In specific embodiments, d32 is zero. A ration of d32 to the length L1 of the tube may essentially be 0-1. In embodiments, said ratio is less than 0.8, such as less than 0.5, especially less than 0.3. The ratio may in further embodiments be larger than zero, such as at least 0.1, especially at least 0.2. In further embodiments, the open-ended tube is configured such that the crystal is arranged at a distance d31 from the first tube end, wherein d31 ≥ 100 µm, such as ≥ 1mm µm, especially ≥ 5, even more especially ≥ 10mm. In embodiments, d31 is 30 mm at maximum, especially 20 mm at maximum.

Hence, in embodiments, the single crystal of the porous framework is arranged at a distance d31 from the first tube end and at a distance d32 from the second tube end, wherein d31 ≥ 5mm, and wherein d32 ≤ 5 mm. The distances d31 and d32 especially refer to a shortest distance between the porous framework and the first tube end and the second tube end respectively. Therefore, the length of the tube L1 may be (slightly) larger than d31+d32 (L1> d31+d32). In practice, the dimensions of the single crystal of the porous framework may be substantially smaller than those of the open-ended tube. Hence, in embodiments d31+d32 may (almost) equal the length of the open-ended tube.

In embodiments, the single crystal may be arranged in the narrowing part. In particular, the narrowing part may extend towards the first tube end and towards the second tube end from the single crystal (or from a target location for the single crystal). In further embodiments, the narrowing part may extend from the single crystal towards the first tube end for at least 0.5 mm, such as for at least 1 mm. Similarly, in further embodiments, the narrowing part may extend from the single crystal towards the second tube end for at least 0.5 mm, such as for at least 1 mm.

In further embodiments, the narrowing part may be arranged at a distance from the first tube end, especially at a distance of at least 1 mm, such as at least 2 mm, especially at least 4 mm. In further embodiments, the distance between the narrowing part and the first tube end may be at most 15 mm, such as at most 10 mm, especially at most 5 mm. Further, especially a thickness of the tube wall ("tube wall thickness") may depend on a size of the tube. The thickness may vary over the tube, especially over the length of the tube. The tube wall thickness may in embodiments be in the sub micrometer range. Yet, in further embodiments, the thickness may be in the micrometer range. In embodiments the tube wall thickness is in the range of 0.1-1000 µm, especially in the range of 1-100 µm, especially 1-50 µm such as 1-20 µm. In further embodiments dt is in the range of 10-50 µm. The length L1 of the tube is especially in the range of 5-40 mm, such as 10-30 mm, especially 10-25 mm. In embodiments, L1 is in the range of 10-18 mm. In further embodiments, L1 is in the range of 19-25 mm.

Hence, in embodiments, the open-ended tube comprises a tube wall defining the open-ended tube, and a length L1, wherein the tube wall has a (tube wall) thickness (dt) selected from the range of 1-50 µm , and wherein the length L1 is selected from the range of 5-30 mm, especially 10-25 mm.

Herein, the second tube end is especially explained in relation to an end of the tube comprising an opening for arranging (such as dipping) in a fluid or a solution comprising an analyte to be analyzed. As such, the analyte may especially be introduced into the porous single crystal via the second tube end (see further below). The first tube end is further especially explained in relation to the end of the tube arranged opposite to the second tube end. It will be understood that the numbering "first" and "second" are only used to distinguish between the two ends. Hence, in embodiments, the first tube end may relate to the end for providing the sample in the tube (and the second tube end is arranged at the opposite end of the tube), and especially definitions used herein with respect to the first and second tube end may be changed around.

The sample holder arrangement may in embodiments be configured for preparing a sample, especially a sample that may be used in an X-ray analysis method. The sample may be prepared by arranging the second tube end in a solvent (including a solvent mixture) comprising an analyte. The solvent may in embodiments be comprised in a (solvent or sample) container, e.g., a bottle or vial. By arranging the tube in the solvent, the analyte (in the solvent) may be introduced in (the single crystal of) the porous framework, especially thereby providing a doped porous single crystal.

The phrases "introduced into the porous single crystal", "introduced in the porous framework", "providing the solvent (comprising the analyte) to the crystal" and similar phrases herein may especially refer to the porous single crystal absorbing the analyte, wherein the analyte is essentially trapped at a binding site (of the framework) of the porous single crystal, especially wherein the analyte is rendered oriented and observable for X-ray analysis (see further below).

The terms "porous single crystal", "the single crystal of the porous framework" and similar terms may herein especially refer to a porous (crystal) compound having a three-dimensional framework and three-dimensionally regularly-arranged pores and/or hollows. The term "single crystal" is especially used indicating that the porous single crystal is especially a monolithic compound. Moreover, the term "(porous) framework" especially refers to a three dimensional framework, especially having three-dimensionally arranged pores. Hence, the term porous crystal of the porous framework may refer to a monolithic porous framework (or compound). In embodiments, the porous single crystal may comprise a crystalline sponge. In further embodiments, the porous single crystal may comprise a porous single crystal as described in EP3269849A1 and/or EP3118610A1, which are hereby herein incorporated by reference.

In embodiments, the porous single crystal, especially (the single crystal of) the porous framework, may comprise a metal-organic framework material. A metal-organic framework material may comprise an organic-inorganic hybrid crystalline porous material comprising an essentially regular array of metal ions (or clusters) surrounded by organic linkers.

The metal-organic framework material may in embodiments be formed of a metal salt ZnX₂, especially where X = Cl or Br or I. In further embodiments, the metal-organic framework material may be tri-pyridinyl triazine (tpt)-based, especially tpt-ZnX₂ based, such as 2 tpt · 3 ZnX₂ based, especially where X comprises an element selected from the group comprising Cl, Br and I. Especially, X = Cl, Br or I. In further embodiments, the metal-organic framework material may comprise a cartridge-based system. In further embodiments, the metal-organic framework material may be tpt-ZnCl₂ based. In further embodiments, the metal-organic framework material may be tpt-ZnBr₂ based. In further embodiments, the metal-organic framework material may be tpt-ZnI₂ based. In further embodiments, ZnX₂, especially tpt-ZnX₂ may comprise two different elements X selected from the group comprising Cl, Br, and I. However, in general, ZnX₂, especially tpt-ZnX₂, may comprise twice the same element selected from the group comprising Cl, Br, and I.

In embodiments, (the single crystal of) the porous framework comprises a metal-organic framework material, wherein the metal-organic framework material is formed of a metal salt ZnX₂ where X = Cl or Br or I.

The term "cartridge-based system" may especially refer to a biporous coordination network. The term "biporous coordination network" and similar terms may herein especially refer to a porous coordination network comprising two (or more) distinct large channels, especially wherein the pores are arranged and surrounded by aromatic structures. Such a biporous coordination network may have the ability to take up two (or more) guests independently, thereby allowing the simultaneous isolation of two different guests. Such biporous materials may be composed of alternatively layered 2,4,6-tris(4-pyridyl)-1,3,5-triazine (TPT) and triphenylene; especially wherein the TPT ligand forms infinite 3D network via coordination to ZnI₂, whereas the triphenylene is especially involved in the 3D framework without forming any covalent or coordination bonds with other components. The noncovalently intercalated triphenylene may contain suitable functional groups without causing any change in the biporous coordination networks.

In particular, the term "biporous coordination networks" may especially refer to the coordination networks described by Ohmori et al., 2005, "a Two-in-One Crystal: Uptake of Two Different Guests into Two Distinct Channels of a Biporous Coordination Network", Angewandte Chemie International Edition, 44, 1962-1964 and/or Kawano et al., 2007, "The Modular Synthesis of Functional Porous coordination Networks", Journal of the American Chemical Society, 129, 15418-15419, which are hereby herein incorporated by reference.

Metal organic frameworks formed of ZnX₂ may be particularly suitable given the flexibility due to interpenetrating networks, the electron deficiency due to TPT ligands, and the possibilities to form weak non-covalent type interactions between the porous single crystal and the analyte.

Alternatively, (the single crystal of) the porous framework may comprise (purely) organic materials. The single crystal may in further embodiments comprise a covalent organic framework (COF). Covalent organic frameworks (COFs) may be constructed from organic building units using strong covalent bonds between light atoms (e.g., H, B, C, N, O, Si).

The single crystal of the porous network may in embodiments comprise a porous, crystalline framework.

The sample and/or analyte to be sampled/analyzed may comprise a biological sample, such as (originating from) an extract or a tissue sample. The sample may further comprise a chemical sample, such as a (sample taken from a) product stream or a waste stream of a production process. Especially, the sample may comprise any arbitrary sample comprising an organic molecule. In embodiments, the analyte to be analyzed may comprise an organic molecule. The term "analyte" may especially relate to a molecule to be analyzed or detected, especially a molecule described herein, more especially to an organic molecule described herein. In embodiments, the analyte comprises an inorganic molecule. The analyte may further comprise a plurality of (different) molecules.

The term "organic molecule" herein may refer to any chemical compound that contains carbon, especially a molecule wherein carbon is covalently linked to other elements such as hydrogen, oxygen and nitrogen. In embodiments, the organic molecule may comprise a biological molecule, especially a biological molecule obtained from a biological source, such as a biological molecule produced by an organism, especially a eukaryote or prokaryote, such as by a plant, animal, fungus, bacterium, or archaeum. In further embodiments, the organic molecule may comprise an active substance (also: "active ingredient" or "active constituent"), especially an active substance with biological activity, *i.e.,* an active substance which has a beneficial and/or adverse effect on living matter, such as an active substance with a pharmaceutical, cosmetical, and/or nutraceutical effect or a salt, acid and/or base thereof. The term "organic molecule" may herein also refer to a plurality of organic molecules.

In embodiments, the analyte, especially the organic molecule may be selected from the group consisting of an organic biomolecule, *i.e.,* the organic molecule may comprise an organic biomolecule.

The analyte may in embodiments be comprised (especially dissolved) by (in) the solvent. The solvent may be an inorganic solvent. In further embodiments, the solvent comprises an organic solvent. The term "solvent" may refer to a plurality of different solvents, e.g. (a combination of) different organic solvents, and/or different in organic solvents. The sample may especially comprise the analyte and the solvent. In further specific embodiments the solvent comprises a supercritical fluid. The supercritical fluid may especially comprise supercritical CO₂. Hence, in embodiments, (materials of) the sample holder arrangement, especially of the sample holding part, is (are) resistant to supercritical fluid conditions.

In embodiments, the sample may comprise a solvent, especially an apolar or non-polar (organic) solvent (for the analyte). In further embodiments, the sample may comprise an apolar (organic) solvent. In further embodiments, the sample may comprise a non-polar (organic) solvent. In further embodiments, the solvent comprises a polar or non-polar solvent (or a mixture thereof), and especially the analyte comprises an organic molecule.

In further embodiments, the solvent may especially be selected for compatibility with the porous single crystal. Typically, highly polar solvents such as DMSO, DMF or water may not be suitable since they may destroy the porous single crystal. Hence, in general, the solvent may comprise an apolar or non-polar (organic) solvent or a mixture of polar and non-polar solvent.

In further embodiments, the solvent may comprise a non-polar solvent, especially a non-polar solvent selected from the group comprising trichloro methane (chloroform), cyclohexane, hexane, n-pentane, and n-heptane.

In further embodiments, the solvent may comprise a polar solvent, especially a polar solvent selected from the group comprising dichloromethane, chloroform, 1,2-dichloroethane, 1,2-dimethoxyethane, THF, acetone, Ethyl-Methyl-Ketone, acetyl acetate, methanol, ethanol, 1-propanol, and 2-propanol. In particular, the polar solvent may be selected to be suitable to dissolve the analyte in a concentration of at least 1 mg/ml.

Furthermore, the sample holding part, especially the open-ended tube may especially be configured for being resistant to the solvent. The open-ended tube may in embodiments comprise a (tube) material that is resistant to one or more of the solvents described herein. In embodiments, the open-ended tube is made of a low X-ray absorption metal or polymer, especially a solvent resistant low X-ray absorption metal or polymer. In further embodiments, the open-ended tube may comprise aluminum, such as an aluminum composite. In further embodiments, the open-ended tube comprises a glass. The open-ended tube may be configured such that X-ray absorption is limited, especially minimal. The tube wall thickness (see above) may be selected depending on the (amount of) X-ray absorption of the tube material (over the wall thickness). For instance, embodiments of a polymer may absorb less X-ray than glass embodiment (having the same wall thickness) and a thicker wall may be selected for such polymers (relative to such glass embodiments). Further, a type of glass for the tube may further be selected for having a relatively low X-ray absorption compared to standard (laboratory) glass (with the same thickness). The (tube) material of the open-ended tube especially comprises a low X-ray absorption glass. The (tube) material may in further embodiments comprise quartz. As indicated above, the open-ended tube may, in embodiments, comprise a metal, such as aluminum, which may provide improved mechanical and/or chemical stability. In particular, aluminum may further have a low X-ray absorption. Hence, in embodiments, the open-ended tube comprises a tube material selected from the group comprising a glass, quartz, and a polymeric material, especially a solvent resistant polymer. Examples of polymeric materials that may be used are for instance polyimide, polypropylene (PP), polyethylene (PE), polyvinylidene difluoride (PVDF), polychlorotrifluoroethylene (PCTFE) polymethylpentene (PMP or TPX), and polytetrafluoroethylene (PTFE). Said tube material may in embodiments comprise (a) polyimide. In further embodiments, the tube material comprises PTFE. In yet further embodiments, the tube material comprises PCTFE. In further embodiments, the tube material comprises a low X-ray absorption metal such as aluminum. The glass is especially a low X-ray absorption glass. The tube wall may in embodiments essentially consist of the (tube) material described above. The term (tube) material may refer to a plurality of different (tube) materials.

The solvent may in embodiments be comprised in a (solvent) container (herein also indicated as "solvent container" or "sample container"). Essentially, the container may comprise any arbitrary container (as long as it may comprise the solvent optionally comprising an analyte or sample). The container may for instance comprise a bottle or e.g. a (standard) vial. The container may in embodiments be closed by a (bottle) cap, such as a screw cap or a crimp cap, known in the art. The cap may be configured for closing (and sealing) the (solvent) container (comprising the solvent and especially the analyte). The cap may be configured for screwing on the container. In further embodiments, the cap may be clipped at the container. The cap has especially a bottom side configured to be arranged on the container. The cap further especially has a top side (configured opposite to the bottom side). The cap may further comprise a septum (or a gasket or a (crimp) seal). The cap may be configured for enabling piercing through the cap, especially through the septum, with a piercing element, e.g., with a syringe or needle, such as to reach (a solvent) in the container. Further, especially, the open-ended tube may be configured as a piercing element. The open-ended tube may for have a sharp tip (at the second tube end), especially enabling to pierce through (the septum of) the cap. The tube is in embodiments mechanically stable allowing piercing of the septum. Especially, (a combination of) the tube thickness and/or tube material and/or cross-sectional area at the second tube end is configured for allowing to pierce the septum.

Herein, the phrase a "cap comprising a septum" may in embodiments also refer to a cap comprising a gasket or a cap comprising a seal, especially wherein the gasket or seal enable piercing through the cap (from the top side of the cap to the bottom side of the cap (and/or vice versa), see further below). The term "septum" especially relates to an (engineered) membrane that permits transfer of a substance (a fluid) without contact with air, usually using a syringe with needle. The term may in embodiments refer to a seal and/or a gasket.

In embodiments, the sample holder arrangement, especially the base part, comprises the (bottle) cap. In further embodiments, the sample holding part, especially the open-ended tube is associated to the (bottle) cap, and especially the sample holder arrangement may be configured for connecting to the (solvent) container. In specific embodiments, the open-ended tube is configured for piercing the (bottle) cap for the (solvent) container, especially wherein the cap comprises a septum (or seal) (for sealing the container). In further embodiments, the open-ended tube is arranged through the cap (and associated with the cap). The first tube end may especially be arranged at the top side (of the cap). Further, the second tube end may be arranged at the bottom side (of the cap). Additionally or alternatively, the cap is arranged at the first tube end. Hence, in embodiments, the second tube end is arranged at the bottom side of the cap, and especially the first tube end is arranged at or in (the bottom side of) the cap. The first tube end may e.g. be connected to (the bottom side of) the cap, especially to the septum. In embodiments, the cap may close the first tube end (at the bottom side of the cap). A plane of the cap may especially be arranged perpendicular to the tube axis. Such embodiments may facilitate dipping of the tube into the solvent (via manipulation/handling via the cap).

Hence, in specific embodiments, the sample holder arrangement, especially the base part, comprises the (bottle) cap, wherein the cap has a bottom side configured to be arranged on the container, and a top side, wherein the cap comprises a septum (for sealing the container), wherein the open-ended tube is arranged through the septum such that the first tube end is arranged at the top side (of the cap) and such that the second tube end is arranged at the bottom side (of the cap).

In further embodiments, the sample holder arrangement, especially the base part, comprises the (bottle) cap, (wherein the cap has a bottom side configured to be arranged on the container, and a top side,) wherein the cap comprises a septum (for sealing the container), wherein the first tube end is arranged at or in the septum (at the bottom side of the cap) and the second tube end is arranged at the bottom side (of the cap).

In embodiments, the cap comprises a screw cap or a crimp cap. The cap may comprise a polymeric material. In embodiments, the cap comprises a metal material. In further specific embodiments, the (bottle) cap may comprise a (ferro)magnetic material.

In yet further specific embodiments, the sample holder arrangement comprises the open-ended tube (comprising the single crystal) arranged in a packaging container. The packaging container may in embodiments, further comprise a solvent for an analyte to be analyzed. The packaging container may further comprise a (packaging container) cap or lid for closing the packaging container. The open-ended tube may temporarily be fixated in the packaging container (e.g. to prevent the tube from damaging). The packaging container may comprise a guiding and or a fixation element to temporarily fixate the tube (in the packaging container). The packaging container may especially host the sample holding part. Hence, in embodiments, the base part comprises the packaging container.

In specific embodiments, the open-ended tube comprises the (bottle) cap, wherein the first tube end is arranged at or in the septum (at the bottom side) as described above. Further, especially, in embodiments, the packaging container cap or lid may be magnetic. In embodiments, the (bottle) cap (at the tube) is attracted by and connected to the packaging container cap or lid by a magnetic force (thereby temporarily fixating the tube in the packaging container). The sample holding part may in embodiments be magnetically associated to the base part.

In further specific embodiments, the packaging container and the (solvent) container are the same container. Moreover, also the packing container cap or lid may be the (bottle) cap described herein. The packaging container may in embodiments be closed by the (bottle) cap.

The sample holder arrangement comprising the packaging container containing the open-ended tube (with the single crystal) and the solvent, and especially further (also) the (bottle) cap may provide an arrangement that may be stored and/or directly be used (in the method described herein). Such arrangement may be configured for a predetermined type of analyte. The solvent may e.g. be provided to a solvent container (or sample container) together with a (dried or solid) analyte (and the analyte may be dissolved in the solvent). Next, the tube comprising the (bottle) cap may be arranged at the solvent container, and the cap may be used to close the container (again), especially wherein the open-ended tube is (re-)arranged in the solvent (with the second tube end). In specific embodiments (wherein the packaging container is the solvent container) the analyte may be provided to the solvent in the packaging container/solvent container. The container may be closed by the (bottle) cap. The open-ended tube may further especially be arranged in the solvent through (the septum of) the cap.

Hence, in embodiments, the base part comprises a (packaging) container, wherein the packaging container contains the sample holding part, especially wherein the packaging container is closed by the (bottle) cap. Especially, the (bottle cap) comprises a septum. Further, especially the open-ended tube comprises a sharp tip (at the second tube end), configured to pierce through (the septum of) the cap. In yet further embodiments, the packaging container further comprises the solvent.

In embodiments, a small opening (through hole) may be provided in the cap, especially in the septum of the cap, allowing the second tube end to pass through the cap. In further embodiments, the second tube end may be used (and configured) to pierce through the cap (the septum). In yet further embodiments, a first tube end may be connected to the cap and a further tube or venting element may be configured through the cap, such that an open fluid connection is provided from the first tube end to the top side of the cap.

The packaging container may in embodiments comprise the (solvent) container described herein, e.g. a bottle or a vial. Alternatively the container may be a different packaging container.

Hence, in embodiments, the sample holder arrangement, especially the base part, comprises a container comprising (hosting) the open-ended tube and a solvent, wherein the sample holder arrangement further comprises a (bottle) cap closing the container, wherein the cap comprises a septum (for sealing the container). Yet, in further embodiments, the container (and the solvent) is (are) not necessarily comprised by the sample holder arrangement.

In an aspect, the invention further provides a kit of parts comprising a packaging container and (at least part of) a sample holder arrangement, especially at least the open-ended tube (of the sample holder arrangement), wherein (the tube of) the sample holder arrangement is contained in the packaging container. Optionally, the kit of parts further comprises one or more of the (bottle cap) and the solvent.

The sample holder arrangement, especially the sample holding part, may in embodiments be used for crystallography. In further specific embodiments, the sample holder arrangement, especially the base part, is configured to be mounted on a diffractometer for crystallography. The sample holder arrangement is especially configured for single crystal X-ray crystallography. In embodiments, the first tube end is configured for connecting to the diffractometer. In specific embodiments, an outer dimension of the first tube end matches an inner dimension of the base part, especially of a base part or a base part adapter, allowing to arrange (part of) the open-ended tube in the diffractometer, especially in the base part or the base part adapter. In further embodiments, a shape of the open-ended tube (especially at a location comprising the first tube end) is configured for matching a shape of a part of diffractometer, especially a shape of the base part or the base part adapter or goniometer head. The open-ended tube (at a location comprising the first tube end) may in embodiments comprise a thread and the diffractometer or goniometer or the goniometer head or the base part may comprise a matching thread enabling the tube and the diffractometer or the goniometer or the goniometer head or the base part to be screwed together. The tube (at a location comprising the first tube end) may in further embodiments comprise a clip configured for clipping the tube to, especially in, the diffractometer or goniometer or the goniometer head or the base part. Additionally or alternatively, a (viscous) material may be configured between the tube and the diffractometer or goniometer or the goniometer head or the base part (to connect and seal the tube in the diffractometer or goniometer or the goniometer head or the base part).

The open-ended tube may in embodiments be arranged in the diffractometer or goniometer or the goniometer head or the base part. In embodiments, the base part comprises (is) the diffractometer or goniometer or the goniometer head or the base part (associated to the sample holding part, especially to the open-ended tube). In further embodiments, the base part is configured to be functionally connected to / associated with the base part adapter or goniometer head. In further embodiments, the base part is attached to the base part adapter or goniometer head. In yet further embodiments, the tube may be removed from the (first) base part and attached to the base part or the base part adapter or goniometer head (especially a further base part). The base part adapter or goniometer head may especially comprise an opening (such as a hole or a channel) configured to provide access to the first tube end. The opening or channel may enable filling of the tube (with the solvent and the analyte) after fitting it into the base part or the base part adapter or goniometer head. The opening or channel may further allowing evaporation of the solvent through the first tube end of the tube. In further specific embodiments, the base part adapter or goniometer head comprises a B1A base part. In further embodiments, the base part adapter or goniometer heads comprises an adjustable crystal mount. The mount may, in embodiments, allow a translation (of the tube) parallel to the (plane of the) opening. In further embodiments, the mount may allow a translation (of the tube) perpendicular to the opening. The base part adapter or goniometer head may essentially comprise any base that may be used for (X-ray) crystallography

Hence, in embodiments, the open-ended tube is arranged in the base part or the base part adapter or goniometer head. In embodiments, the tube and the base part or the base part adapter are screwed together. In further embodiments, the tube is clipped in the base part adapter or goniometer head. In further embodiments, the base part is configured to connect to the base part adapter or goniometer head, especially wherein the open-ended tube is arranged in the base part adapter or goniometer head.

In an aspect, the invention provides an open-ended tube as such. For instance, the invention provides an open-ended tube comprising a first tube end and a second tube end, wherein the open-ended tube comprises a narrowing part, wherein in the narrowing part an internal tube dimension reduces in a direction from the first tube end to the second tube. Especially, the open-ended tube may host a single crystal of a porous framework. The single crystal of a porous framework may be arranged within the open-ended tube between the first tube end and the second tube end, wherein dimensions of the narrowing part and dimensions of the single crystal of the porous framework are chosen such that the single crystal of the porous framework cannot escape from the open-ended tube via the second tube end. In specific embodiments, the single crystal of the porous framework may be is arranged at a distance d31 from the first tube end and at a distance d32 from the second tube end. Especially, d31 ≥ 5 mm, and d32 ≥ 5 mm.

In yet further specific embodiments, the single crystal of the porous framework may be configured between the narrowing part and a second narrowing part. Both narrow parts may block escape from the single crystal of the porous framework from the open-ended tube. However, both narrowing parts may allow fluid to pass, and e.g. flow through the open-ended tube and/or escape therefrom.

Especially, the second narrowing part may be created after introduction of the single crystal of the porous framework into the open-ended tube. For instance, the second narrowing part may be obtained by pinching part of the open-ended tube. Pinching may be done while applying moderate heat. Instead of pinching, an insert element may be configured in the open-ended tube. For instance, such insert element may be introduced via the first tube end. The insert element may have a shape corresponding to part of the open-ended to, to allow positioning the insert element in the open-ended, e.g. via a friction fit. Alternatively or additionally, the insert element may be prevented from moving by the base part or other element. Especially, the insert element does not provide a fluid closure, such that a gas may pass the insert element. For instance, the insert element may comprise one or more of ridges, a rough side surface, and a through hole, such that fluid may flow along and/or through the insert element. However, embodiments to allow fluid flow along and/or through the insert element, or more broadly, embodiments to allow fluid flow along and/or through the second narrowing part are chosen such, that the single crystal of the porous framework into the open-ended tube cannot escape via the second narrowing part. Instead of the term "insert element" also the term "blocking element" may be applied.

In embodiments, the insert element may be a polymeric body. In embodiments, the insert element may be a glass body. In embodiments, the insert element may comprise a fiber. The insert element may be an elongated body. The insert element may have a length of at least 30% of the open-ended tube.

Hence, in an aspect the invention also provides a method for providing an open-ended tube with a single crystal of a porous framework, the method comprising: (a) providing an open-ended tube comprises a first tube end and a second tube end, wherein the open-ended tube comprises a narrowing part, wherein in the narrowing part an internal tube dimension reduces in a direction from the first tube end to the second tube end; (b) arranging via the first tube end a single crystal of a porous framework in the open-ended tube, especially until the single crystal of a porous framework is blocked by narrowing part. As indicated above, the dimensions of the narrowing part and dimensions of the single crystal of the porous framework may be chosen such that the single crystal of the porous framework cannot escape from the open-ended tube via the second tube end. Hence, the method for providing an open-ended tube with a single crystal of a porous framework may comprise arranging the single crystal of the porous framework at a target location in the open-ended tube

The method may further comprise (subsequently) providing the second narrowing part between the open-ended tube between the target location and the first tube end. The second narrowing part is especially configured closer to the first tube than the second tube end. The second narrowing part may be created before introducing the analyte into the single crystal of a porous framework or after introducing the analyte into the single crystal of a porous framework. Especially, second narrowing part may be created before introducing the analyte into the single crystal of a porous framework. As indicated herein, the (first) narrowing part and the second narrowing part may allow a fluid flow through the open-ended tube.

Hence, the open-ended tube may comprises a second narrowing part, wherein the second narrowing part is arranged between the single crystal of the porous framework and the first tube end, wherein the second narrowing part may be dimensioned such that the single crystal of the porous framework cannot escape through the second narrowing part.

In a further aspect, the invention provides a sample preparation method ("preparation method") for preparing a sample with the sample holder arrangement described herein. The sample may especially be an X-ray sample. The sample preparation method may in embodiments comprise a first preparation stage. In embodiments, the first preparation stage comprises arranging the second tube end in a solvent (especially wherein the solvent is in a container) comprising an analyte for (or during) a soaking period to introduce the analyte into the single crystal of the porous framework, especially to provide a doped porous single crystal. In embodiments, the container may be closed by a closure, such as a cap a lid, especially comprising a septum or membrane. Arranging the second tube end in the solvent may in embodiments (further) comprise providing the second tube end through a closure, especially a cap, even more especially a septum of a cap, closing the container (comprising the solvent). The soaking period may in embodiments depend on capillary forces acting on the solvent (in the tube). The soaking period may depend on a (characteristic) size (especially cross sectional area) of the tube, and e.g. a distance between the single crystal and the second tube end and/or a minimal distance between the solvent and the single crystal. The soaking period may further depend on a distance between a surface level of the solvent and the single crystal. The soaking period may further depend on physical properties of the solvent (like viscosity, surface tension). The second tube end is essentially arranged in the solvent (during soaking), i.e. under the surface (level) of the solvent. In embodiments, the first preparation stage (further) comprises arranging the second tube end in the solvent, wherein a shortest distance (d4) between a surface of the solvent to the second tube end is selected in the range of >0 mm-5mm. In further embodiments d4 is selected in the range of 1-5 mm or 5-15 mm. In embodiments a ratio of d4 to d32 is in the range of 0.1-1, especially in the range of 0.1-0.5. Yet, d4/d32 may in further embodiments be larger than 1. The distance d4 especially relates to a depth over which the tube is dipped in the solvent. The shortest distance is especially determined along a line parallel to the tube axis and may depend on a type of meniscus and may be determined at a bottom level of a concave meniscus (i.e. remote from the tube) as well as a bottom level of a convex meniscus (i.e. near the tube). In embodiments the soaking period is at least 10 minutes, such as at least 30 minutes, or at least 1 hour. The soaking period is especially 4 days at maximum, such equal to or less than 3 days, more especially between 10 minutes and-48 hr., between 10 minutes and 24 hr., such as 1-24 hrs. In further embodiments, the first preparation stage may comprise providing the second tube end through a closure, especially a cap, even more especially a septum of a cap, closing the container (comprising the solvent), for arranging the second tube end in the solvent. The preparation method may further comprise a second preparation stage. The second preparation stage especially comprises removing the second tube end from the solvent.

In further specific embodiments, the preparation method comprises (i) a first preparation stage comprising arranging the second tube end in a solvent in a container comprising an analyte for at least 10 minutes, such as at least 30 minutes, especially at least1 hour, especially 10 minutes-48 hr., such as 10 minutes-24 hr., to introduce the analyte into the single crystal of the porous framework (to provide a doped porous single crystal); and (ii) a second preparation stage comprising removing the second tube end from the solvent. By introducing the analyte into (the single crystal of) the porous framework a doped porous single crystal may be provided. The term "doped" in relation to the single crystal, herein especially refers to the crystal comprising the analyte, especially the sample.

In further embodiments, the preparation method, especially the second preparation stage, further comprises a stage of (slowly) evaporating the solvent, especially with a rate of 0.1 to 1000 µl/24 hours. Evaporation may be through the open-ended tube and/or via another opening in the container. In embodiments, the first tube end may be connected to the cap and the venting element (see above) is configured through the cap and especially evaporation may (additionally also) be through the venting element.

In embodiments of the sample preparation method the solvent comprises a polar or non-polar solvent (or a mixture thereof), and the analyte comprises an organic molecule as described herein. The solvent may comprise any solvent described above. The solvent may comprise an inorganic solvent and/or an organic solvent, especially an organic solvent.

In yet a further aspect, the invention provides an X-ray analysis method ("analysis method"). In embodiments, the analysis method comprises the sample preparation method of the invention. In further embodiments, the analysis method further comprises an X-ray stage comprising subjecting the sample to single crystal X-ray analysis to provide an X-ray signal. The sample is especially subjected to single-crystal X-ray diffraction (SC-XRD). Further, especially, the (obtained/provided) X-ray signal comprises structure-related information pertaining to the analyte.

The analysis method may comprise subjecting the doped porous single crystal to single crystal X-ray analysis. In embodiments, the analysis method may comprise subjecting the porous single crystal to single crystal X-ray analysis. The single crystal X-ray analysis may especially comprise single-crystal X-ray diffraction (SC-XRD).

In embodiments, the X-ray analysis method may provide an X-ray signal, wherein the X-ray signal comprises structure-related information pertaining to the analyte, especially the organic molecule.

In further embodiments, the analysis method may comprise an analyte identification stage. The analyte identification stage may in embodiments comprise comparing the X-ray signal to reference X-ray signals comprising structure-related information pertaining to reference analytes, especially reference molecules. Additionally or alternatively, the identification stage may comprise determining (or "predicting") a structure of the analyte based on the X-ray signal.

In further embodiments, the identification stage may comprise comparing the X-ray signal to reference X-ray signals comprising structure-related information pertaining to reference organic molecules. The reference X-ray signals may be obtained from a database. Hence, in further embodiments, the identification stage may comprise comparing the X-ray signal to reference X-ray signals from a database, especially wherein the reference X-ray signals comprise structure-related information pertaining to reference analytes, especially reference organic molecules.

In embodiments, the X-ray analysis method may comprise a sample providing stage and an analysis stage (and optionally an analyte identification stage), wherein the sample providing stage comprises providing the doped porous single crystal obtainable according to the sample preparation method as described herein, and wherein the analysis stage comprises subjecting the doped porous single crystal to single crystal X-ray analysis.

In embodiments, the sample preparation method and/or the analysis method comprises manipulating (or moving) the sample holding part, especially the open-ended tube, by moving the base part (and therewith the sample holding part). In further embodiments, the X-ray stage may comprise manipulating the sample holding part by moving the base part. In embodiments, the base part may comprise the cap (enclosing the sample holding part). In further specific embodiments, the base part comprises, especially is, the base part adapter or goniometer head. In further embodiments, the base part is attached to the base part adapter or goniometer head. Yet, in further specific embodiments (especially of one or more of the sample preparation method, the first preparation stage, the second preparation stage, the analysis method and the X-ray stage) the sampling holding part may be removed (detached) from the base part and successively be attached to the base part adapter or goniometer head (as such or e.g. being an embodiment of (a further) base part).

In a further aspect, the invention further provides a system comprising (i) a solvent container and (ii) a sampler. The solvent container ("container" or "sample container") is especially configured to host a solvent comprising an analyte. The system may comprise at least elements of the sample holder arrangement described herein. The system may in embodiments comprise the (solvent) container described herein in relation to the sample holder arrangement. In further specific embodiments, the system has an operational mode, especially comprising one or more stages. The system may in further embodiments comprise a control system, especially configured to control (one or more stages in) the operational mode. Additionally or alternatively the system may be functionally connected to a control system (not being part of the system). In further embodiments, the operational mode comprises a first preparation stage and especially (also) a second preparation stage. The first preparation stage of the operational mode may in embodiments comprise the first preparation stage described in relation to the preparation method. Likewise, the second preparation stage of the operational mode may in embodiments comprise the second preparation stage described in relation to the preparation method. The system may especially be configured to execute the sample preparation method described herein.

The first preparation stage may in embodiments comprise (controlling) the sampler (to) arranging the second tube end (of the open-ended tube) of the sample holder arrangement described herein in the solvent (in the container) (for soaking period as described herein), especially for at least 10 minutes, to introduce the analyte into the single crystal of the porous framework (to provide a doped porous single crystal). The second preparation stage may in embodiments comprise (controlling) the sampler (to) removing the second tube end from the solvent (again). In further embodiments, the second preparation stage may further comprise evaporating the solvent from the open-ended tube.

In further embodiments, the system is (also) configured to execute the X-ray analysis method of the invention. The system may especially further comprise an X-ray system. For executing the analysis method, the operational mode may further especially comprise an X-ray stage. The X-ray stage may in embodiments comprise the X-ray stage described herein in relation to the analysis method. In specific embodiments, the X-ray stage comprises (controlling) the sampler (to) providing the sample holder arrangement (especially comprising the doped porous single crystal) to the X-ray system, and (controlling) the X-ray system (to) subjecting the sample to single crystal X-ray analysis to provide an X-ray signal, especially wherein the X-ray signal comprises structure-related information pertaining to the analyte. The system may in embodiments comprise an analysis system, comprising the X-ray system.

In embodiments (especially of the operational mode), the base part may comprise the cap. In further embodiments, the base part comprises, especially is, the base part adapter or goniometer head. In further embodiments, the base part is attached to the base part adapter or goniometer head. Yet, in further specific embodiments the sampling holding part may be removed (detached) from the base part and (successively) be attached to the base part or goniometer head (as such or e.g. being an embodiment of (a further) base part).
In further embodiments, the sample is subjected to single-crystal X-ray diffraction (SC-XRD).

The term "control system" may refer to a plurality of different control system. Different control systems may e.g. control different actions of the operational mode. Alternatively or additionally, the system comprises the control system, configured to execute one or more of the preparation stage(s) and the X-ray stage when functionally coupled to one or more of the sampler, the analysis system and/or the X-ray system.

In a further aspect, the invention may provide a production method for providing the sample holding part. The production method may comprise providing an open-ended tube, wherein the open-ended tube comprises a first tube end and a second tube end, wherein the open-ended tube comprises a (first) narrowing part. In embodiments, in the narrowing part an internal tube dimension reduces in a direction from the first tube end to the second tube end. Especially, the (first) narrowing part is configured closer to the second tube end than to the first tube end.

The production method may further comprise arranging a single crystal of a porous framework within the open-ended tube between the first tube end and the second tube end. In particular, the method may comprise choosing the dimensions of the narrowing part and of the single crystal of the porous framework such that the single crystal of the porous framework cannot escape from the open-ended tube via the second tube end.

In embodiments, the production method may further comprise providing a second narrowing part in the open-ended tube between the single crystal of the porous framework and the first tube end. In particular, the production method may comprise arranging the single crystal of the porous framework at a target location in the open-ended tube, and (subsequently) providing the second narrowing part between the open-ended tube between the target location and the first tube end.

In further embodiments, the method may comprise narrowing the open-ended tube (to provide the second narrowing part) by one or more of (i) (mechanically) crimping the open-ended tube 10, (ii) heating the open-ended tube 10, especially in embodiments wherein the open-ended tube 10 comprises a thermoplastic tube material or a glass, and (iii) inserting an insert element, such as a stopper, a fiber, or a (metal) rod or a capillary, into the open-ended tube 10.

In further embodiments, the method may comprise narrowing the open-ended tube by (mechanically) crimping the open-ended tube. Such embodiments may be particularly convenient/simple in execution, and may have a low probability of inadvertently damaging the crystal.

In further embodiments, the method may comprise narrowing the open-ended tube by inserting the insert element, especially by inserting a (metal) rod. Such embodiments may provide the further benefit that the insert element may provide mechanical stability to the open-ended tube.

In embodiments, the target location may especially be (about) 18 +/-5 mm from the second tube end. In further embodiments, the target location may be arranged between 16 and 20 mm from the second tube end, especially between 17 and 19 mm from the second tube end, such as between 17.5 and 18.5 mm from the second tube end.

In yet other embodiments, the open-ended tube may be an essentially non-tapering (open-ended) tube, like a tubular capillary. To such non-tapering open-ended tube a narrowing part may be provided. Thereby, the herein described open-ended tube with the narrowing part may be provided. In yet other embodiments, the open-ended tube may be tapering (open-ended) tube, like a tapering tubular capillary, but with internal dimensions that are too small to prevent the single crystal of the porous framework from escaping via the second tube end. To such open-ended tube, a (first) narrowing part may be provided, such as via pinching. Thereby, the herein described open-ended tube with the narrowing part may be provided. Hence, one may start with a tube having the second tube end 19 which has a bigger internal diameter than the size of a single crystal. For example, when a tube is made from polymer, the (first) narrowing part may be provided with a controlled temperature and attraction force (such as weight). Thereafter, the single crystal may be introduced (via the first end). This may be advantageous in view of production time and/or production ease of the open-ended tube, and may also allow an on-site adaptation of the tube into the open-ended tube as defined herein comprising the narrowing part.

As further also elucidated below, the invention also provides (in an aspect) a computer program product, when running on a computer which is functionally coupled to or comprised by the system, controls one or more controllable elements of such system, especially for executing the respective stage(s), such as one or more of the first preparation stage, the second preparation stage (optionally including evaporation of the solvent), the X-ray stage and the analyte identification stage.

In embodiments, the analysis system may comprise an X-ray system, especially an X-ray system configured for single-crystal X-ray diffraction (SC-XRD). In further embodiments, the analysis system may be configured to provide an X-ray signal, especially wherein the X-ray signal comprises structure-related information pertaining to the analyte. In further embodiments, the system, especially the control system, may further comprise a structure prediction system, wherein the structure prediction system is configured to predict the structure of the analyte based on the X-ray signal.

In embodiments, the system may comprise the control system. The control system may be configured to control one or more of the sampler, the analysis system, structure prediction system, and the X-ray system.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

### BRIEF DESCRIPTION OF THE DRAWINGS

Embodiments of the invention will now be described, by way of example only, with reference to the accompanying schematic drawings in which corresponding reference symbols indicate corresponding parts, and in which: Fig. 1 schematically depicts an embodiment of the sample holder arrangement according to the invention; Fig. 2 schematically depicts some further aspects of the sample holder; Figs 3 depict some configurations of the sample holder arrangement; and Figs 4-6 depict some further aspects of the sample holder arrangement, the system, and the methods of the invention. The schematic drawings are not necessarily to scale.

### DETAILED DESCRIPTION OF THE EMBODIMENTS

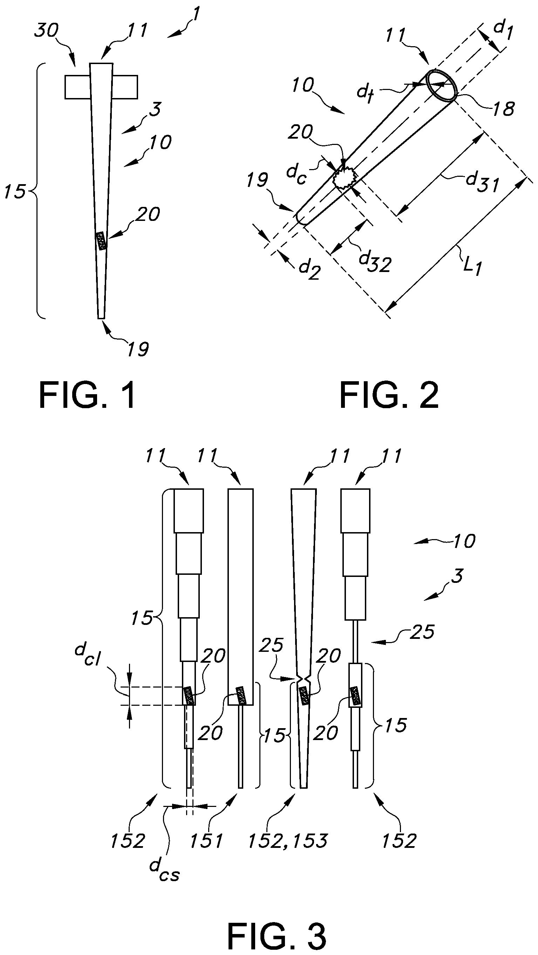

Fig. 1 schematically depicts an embodiment of the sample holder arrangement 1. The embodiment comprises a base part 30 hosting (enclosing) a sample holding part 3. The sample holding part 3 is detachably associated to the base part 3, for instance via a thread or clip (not shown) or through deforming the base part 30 and/or the sample holding part. The sample holding part 3 comprises an open-ended tube 10 with a first tube end 11 and a second tube end 19. A single crystal of a porous framework 20 (also "crystal 20" or "single crystal 20") is arranged within the open-ended tube 10 between the first tube end 11 and the second tube end 19. The tube 10 is narrowing in a direction from the first tube end 11 to the second tube end 19. The tube 10 essentially comprises a narrowing part 15 starting at the first end 11 up to (and including) the second tube end 19. In the narrowing part 15 an internal tube dimension reduces. The single crystal 20 may therefore not escape via the second tube end 19. Moreover, dimensions of the narrowing part 15 and dimensions of the single crystal of the porous framework 20 are chosen such that the single crystal of the porous framework 20 cannot escape from the open-ended tube 10 via the second tube end 19.

It may be understood by the skilled person how to select the dimensions of the crystal 20 and of the tube 10 to accommodate the crystal 20 in the tube 10. Some examples are described above and below. In Fig. 2 an example is depicted showing the single crystal of the porous framework 20 having a smallest circularly equivalent crystal diameter dc. The crystal 20 may have been arranged in the tube 10 via the first tube end 11 having a first circularly equivalent inner diameter d1 larger than the smallest circularly equivalent crystal diameter dc. Yet because the second tube end 19 has a second circularly equivalent inner diameter d2 that is smaller than dc, the crystal 20 may not escape from the tube 10 via the second tube end 19.

Herein, the term "circularly equivalent (inner) diameter" of an arbitrarily shaped (flat) surface especially refers to the diameter of a circular (flat) surface having the same size as the arbitrarily shaped (flat) surface. Hence, for the circular tube 10 of the depicted embodiment, the first and second circularly equivalent (inner) diameter d1, d2 correspond to the (actual) inner diameters d1, d2 of the first and second tube ends 11, 19, respectively. Further, these diameters d1, d2, dc and other characteristic dimensions are especially determined in a direction perpendicular to the tube axis 16. It is further noted that the characteristic size, such as the circularly equivalent diameter dc of the single crystal 20 especially relates to the *smallest* circularly equivalent crystal diameter dc. Especially this smallest dimension is relevant, because, based on a larger dimension, the crystal 20 might otherwise rotate which could enable the crystal 20 still to leave the tube 10 via the second tube end 19, see also Fig. 3 more clearly demonstrating a smallest size d_{cs} and a largest size d_{cl} of the crystal.

Further, in Fig. 2 also the distance d31 from the first tube end 11 to the crystal 20 and the distance d32 from the second tube end 19 to the crystal 20 are indicated as well as the length L1 of the tube 10. In embodiments, the length L1 is 10-25 mm. Further also the tube wall 18 is depicted. The open-ended tube 10 may especially be defined by the tube wall 18. The tube wall 18 has a (tube wall) thickness dt which may be 1-50 µm in embodiments . The tube 10, especially the tube wall 18 may in embodiments comprise a tube material such as glass, a low X-ray absorption glass, a low X-ray absorption metal, quartz, and/or a polymer, e.g. polyimide, polypropylene, polyethylene, polyvinylidene difluoride, polymethylpentene, polychlorotrifluoroethylene, and/or polytetrafluoroethylene. A polymer may in embodiments be selected for providing a deformable tube material, which may ease attaching and detaching of the base part 30 to/from the sample holding part 3.

In Fig. 3 some embodiments of the tube 10 with different shapes are depicted. For instance, the second one from the left has a shape comprising a discrete (single) reduction in size of the tube 10. This is herein also indicated as wherein the narrowing part 15 comprises a discrete internal tube dimension reduction 151. In the other examples (and also in Figs 1-2), the narrowing part 15 has a tapering shape 152. Such tapering 152 may be stepwise, but in embodiments, the tapering 152 corresponds to a conical shape 153. Hence, in some embodiments the narrowing part 15 has a conical shape 153. It is further depicted that the narrowing part 15 not necessarily includes one or more of the first tube end 11 and the second tube end 19. Moreover, the narrowing part 15 may be configured at different locations along the tube length. The tube 10 may further comprise more than one narrowing (parts 15). The embodiments at the right side further comprise a second narrowing part 25 (or "constriction") arranged between the crystal 20 and the first tube end 11, which may prevent the crystal 20 from escaping from the first tube end 11. In embodiments the second narrowing part 25 may be provided after providing the crystal 20 to the tube 10.

Hence, in embodiments, the open-ended tube 10 may comprise a second narrowing part 25.

In particular, the second narrowing part 25 may be arranged to position or maintain the crystal 20 at a target location during soaking and/or movement. Hence, the second narrowing part 25 may be dimensioned such that the crystal 20 cannot escape through the second narrowing part 25. For instance, during soaking of the crystal 20, the crystal 20 may, particularly in the absence of the second narrowing part 25, be pushed "up" (towards the first tube end 11) by the solvent 100, which may result in a reduced exposure of the crystal 20 to the analyte 110, which may be detrimental for downstream x-ray analysis of the analyte 110. Hence, by introducing the second narrowing part 25, the crystal 20 may be kept in a desired target location.

In embodiments, the second narrowing part 25 may have a (circularly equivalent) diameter ≤ 70 µm, especially ≤ 50 µm, such as ≤ 30 µm.

The second narrowing part 25 may further be particularly beneficial in embodiments wherein the open-ended tube comprises a (low X-ray absorption) metal material, such as aluminum, especially an aluminum composite. As described above, such open-ended tubes may benefit from (relatively) increased mechanical and chemical stability. However, typically, a drawback of a (low X-ray absorption) metal material for a sample holding part 3 may be a lack of visual access to the crystal 20, such as to confirm that the crystal 20 is arranged in a target location for X-ray analysis, such as at about 18 +/- 0.5 mm from a bottom surface of the base part adapter or the top surface of goniometer head 61, especially from the top surface of the (functionally coupled) goniometer head 61. The presence of the second narrowing part 25, dimensioned such that the crystal 20 cannot escape through the second narrowing part 25, may, however, essentially guarantee that the crystal 20 remains in place, thus (essentially) bypassing the potential drawback of lack of visibility of a metal open-ended tube.

Hence, in specific embodiments, the open-ended tube 10 may comprise the second narrowing part 25 and may comprise a metal material, especially aluminum.

In embodiments, the second narrowing part 25 may be provided by one or more of (i) (mechanically) crimping the open-ended tube 10, (ii) heating the open-ended tube 10, especially in embodiments wherein the open-ended tube 10 comprises a thermoplastic tube material, and (iii) inserting an insert element, such as a stopper, a fiber, or a (metal) rod, or a capillary into the open-ended tube 10. The insert element may be kept fixed by the base part, such as in embodiments the goniometer head or base part adapter.

In particular, the insert element may further provide (additional) mechanical stability to the open-ended tube, especially in embodiments wherein the insert element comprises a rod, especially a metal rod, such as an aluminum rod, or especially a glass rod, or especially a polymer rod.

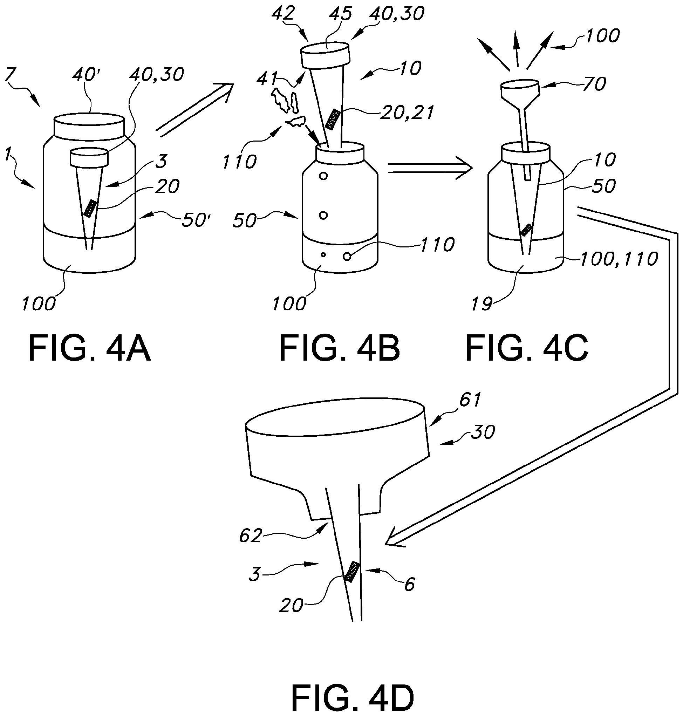

In Figs 4a-4d, some further aspects of the arrangement 1 and of the methods of the invention are depicted. In Fig. 4a an embodiment of a sample holder arrangement 1 in a packaging container 50' is depicted, wherein the packaging container 50' further comprises a solvent 100. Herein this may also be indicated as a kit of parts 7 comprising a packaging container 50'and a sample holder arrangement 1, wherein the sample holder arrangement is contained in the packaging container 50'. The sample holder arrangement 1, especially the base part 30, comprises a (bottle) cap 40, for closing a solvent container 50. It is noted that other configurations of the sample holder arrangement 1 may be possible, wherein the cap 40' of the packaging container 50' may function as the cap 40 (for closing the solvent container 50), and especially also the packaging container 50' may function as the solvent (or sample) container 50. Moreover, in further embodiments (not depicted), the tube 10 may be arranged through the septum 45 of the cap 40 (the base part 30) instead of being arranged at (the septum 45 of) the cap 40 depicted in Fig 4a-4c.

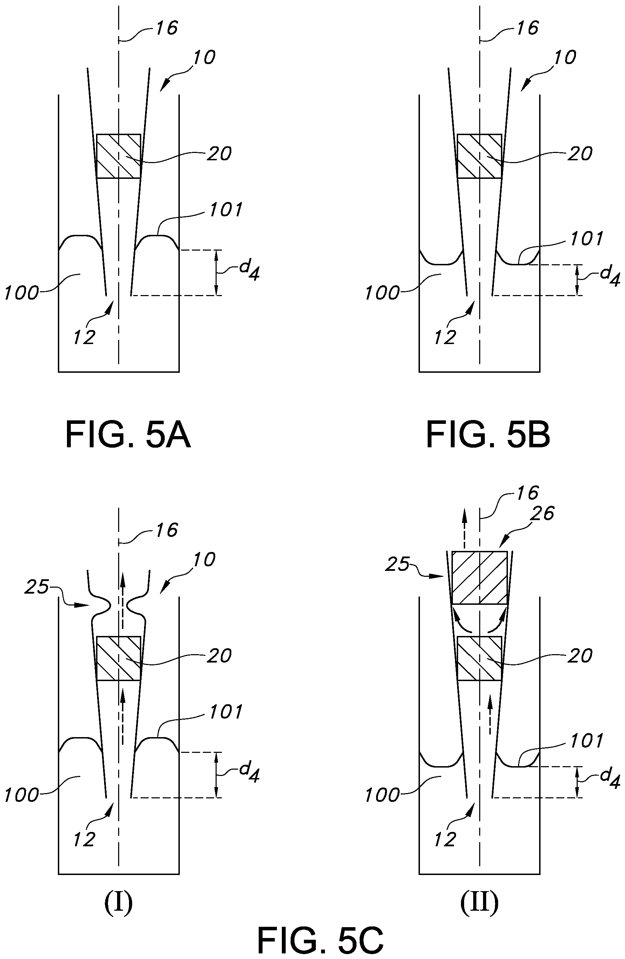

The arrangement 1 may be taken from the package container 50' and be placed on a solvent container 50 containing the solvent 100 comprising analyte 110 (added to the solvent 100) as is schematically indicated in Fig. 4b. There is further depicted that the cap 40 has a bottom side 41 configured to be arranged on the container 50 and a top side 42. The cap 40 comprises a septum 45. In the depicted embodiment, the first tube end 11 is configured at or in the bottom side 41 of the cap 40. When dipping the tube 10 in the solvent, the first tube end 11 may be configured in open fluid connection with the atmosphere using a venting element 70 that is pierced through the septum 45. In alternative embodiments, the open-ended tube 10 is arranged through the septum 45 such that the first tube end 11 is arranged at the top side 42 and such that the second tube end 19 is arranged at the bottom side 41, see Fig. 5. The open-ended tube 10 may in such embodiments be configured for piercing the cap 40 for the container 50. The second tube end 19 may e.g. have a sharp tip 12.

Fig. 4c further also depicts an embodiment of the sample preparation method for preparing a sample 6, especially an embodiment of the first preparation stage, wherein the second tube end 19 is arranged in a solvent 100 in a container 50 (wherein the solvent comprises the analyte 110) to introduce the analyte 110 into the single crystal of the porous framework 20. After this stage the second tube end 19 may be removed from the solvent 100 in the second preparation stage (not shown).

The sample holder arrangement 1 may especially be mounted on a diffractometer for crystallography. The sample holder arrangement 1 may be connected to or may comprise a base adapter or goniometer head 61 as is depicted in Fig. 4d. In the figure, it is very schematically depicted that the open-ended tube 10 is arranged in the base part or the base part adapter or goniometer head 61. The base part adapter or goniometer head 61 comprises an opening 62 configured to provide access to the first tube end 11 (for analyzing the sample 6). The base part 30 may comprise the base part adapter or goniometer head 61 as is depicted in fig. 4d. In further embodiments, the base part 30 may be attached to the base part adapter or goniometer head 61. For instance referring to the embodiment depicted in Fig. 1, the base part 30 of that embodiment may be attached to the goniometer 61. This may be pictured by combining the embodiment of Fig. 1 with the schematically depicted embodiment in Fig. 4d. Yet, in other embodiments, the tube 10 may be removed from the base part 30 and attached to the base part or goniometer head 61.

Figs 5a and 5b schematically depict the open-ended tube 10 being dipped in the solvent 100. In the figures the distance d4 or depth over which the tube 10 is dipped in the solvent 100 is depicted. The shortest distance d4 is especially determined along a line parallel to the tube axis 16 and may depend on the type of meniscus at the surface 101 of the solvent 100. Distance d4 can be determined at a bottom or lowest level of the surface. Hence for a convex meniscus as illustrated in Fig. 5a this may be near the tube 10 and for a concave meniscus depicted in Fig. 5b this may be remote from the tube 10.

Fig. 5c schematically depict two embodiments of a second narrowing part 25. In embodiment I, the second narrowing part 25 may e.g. be obtained by pinching the open-ended tube just above the single crystal of the porous framework 20. In embodiment II, an insert element 26 has (at least partly) been introduced into the open-ended tube just above the single crystal of the porous framework 20. For instance, the insert element 26 may comprises ridges or a through hole. In this way, the second narrowing part 25 may allow a fluid flow through the open-ended tube 10, as also indicated with arrows.

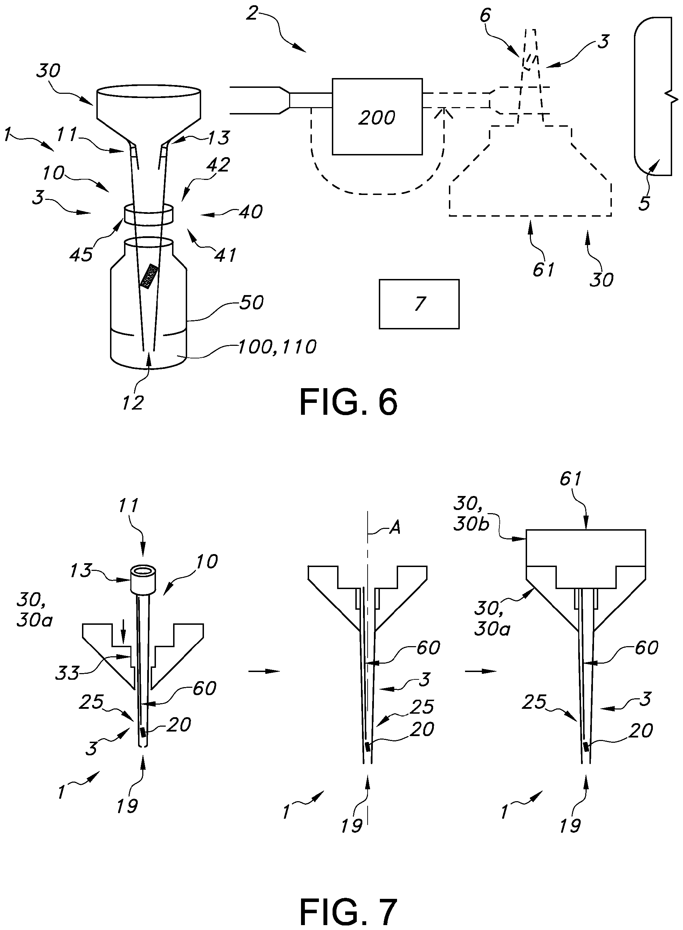

In Fig. 6 an embodiment of the system 2 of the invention is depicted. The figure further depicts an embodiment of the arrangement 1. The system 2 comprises a solvent container 50 and a sampler 200. The solvent container 50 is especially configured to host a solvent 100 comprising an analyte 110. The system 2 has an operational mode comprising a first preparation stage and a second preparation stage, very schematically depicted in the figure. In the first preparation stage the sampler 200 may arrange the second tube end 19 of the sample holder arrangement 1 in the solvent 100 to introduce the analyte 110 into the single crystal of the porous framework 20 (or to 'dope' the crystal 20) (herein also referred to as "soaking"). In the second preparation stage the sampler 200 may remove the second tube end 19 from the solvent 100. Further during in the second preparation stage also the solvent 100 may be evaporated from the open-ended tube 10.

The system 2 may further comprise an X-ray system 5. Therefore, the operational mode may further comprise (very schematically depicted by the dashed lines) an X-ray stage comprising, wherein the sampler 200 may providing the sample holder arrangement 1 to the X-ray system 5, and wherein the X-ray system 5 may subject the sample 6 to single crystal X-ray analysis to provide an X-ray signal.

The system 2 may especially be configured to execute the sample preparation method or the X-ray analysis method described herein. The sample holder arrangement 1 may especially be used for crystallography.

To facilitate automation of the methods described herein, the sample holder arrangement 1 depicted in Fig. 6 comprises a cap 40 through which the tube 10 is arranged.

The open-ended tube 10 of the embodiment may comprise an external connection structure 13 configured for positioning and securing the open-ended tube 10 to the base part 30.

The sampler 200 may manipulate (move) the sample holder arrangement 1 in the different stages by engaging with the base parts 30 and/or introducing into the cap 40. The sampler may further in embodiments detach the base parts 30, and e.g. connect the sample holding part 3 to the base part or the base part adapter and/or to the base part 30. The system 2 may further comprise or be functionally coupled to a control system 7, e.g., to control the sampler 200, the X-ray system 5, and/or for instance the analysis of the X-ray signals.

In Fig. 6, by way of example, the open-ended tube 10 is not partly configured in the base part 30. In other embodiments, however, the open-ended tube 10 may be configured in the base part 30. Hence, especially the open-ended tube 10 is configured detachable to the base part 30, such as in the base 30, and in an attached configuration, the open-ended tube 10 is fixated in the base part 30.

Fig. 7 schematically depicts an embodiment of the sample holder arrangement 1, wherein the sample holder arrangement 1 comprises a sample holding part 3 and a base part 30. On the left, a perspective view is shown, in the middle and on the right, cross-sectional views are shown.

In the depicted embodiment, the sample holding part 3 comprises an external connection structure 13, especially a rim, at the first tube end 11. In particular, the external connection structure may be configured for arranging of the sample holding part 3 into a first base part 30,30a. In particular, the first base part 30,30a may comprise a pin holder base with a first internal connection structure 33, wherein the first internal connection structure 33 is configured to interfacing with the external connection structure 13 of the sample holding part 3. For instance, in the depicted embodiment, the rim at the first tube end 11 may have a diameter (perpendicular to an axis of elongation A of the open-ended tube) (essentially) matching the internal diameter of the first internal connection structure 33 of the first base part 30,30a. Further, in the depicted embodiment, a rim height of the rim at the first tube end (along the axis of elongation A of the open-ended tube) may (essentially) match a depth height of the first internal connection structure 33. Thereby, the sample holding part 3 may be precisely positioned with respect to the base part 30, which may improve mechanical stability, such as by reducing, especially eliminating, movement of the sample holding part 3 with respect to the base part 30, and may facilitate arranging the crystal 20 (or the target location) at a desired distance, such as at about 18 mm, from a bottom surface of the base part adapter or the top surface of goniometer head 61 (see below). In particular, in the depicted embodiment, the position of the sample holding part 3 may be (essentially) fixed by contacting the first base part 30,30a through a taper sleeve boundary and the rim at the first tube end of the sample holding part 3.

In embodiments, a top surface of the base part adapter or goniometer head may hold a rim part (a edge of the first tube end) of the tube so that the top surface prevents the open-end tube from detaching from the base part in a state where the base part attaches with the goniometer head, the tube may be fixed and thereby also the single crystal may be maintained at the target position (even when the tube may have expansion or may shrink due to temperature change (especially using a blowing gas (N₂ gas) to protect a crystal).

In embodiments, the first internal connection structure may comprise one or more of a screw opening and a connection tapering part. In particular, the screw opening may be configured for receiving a screw such that the first internal connection structure and the sample holding part 3 can be screwed together. Similarly, the connection tapering part may be configured for receiving part of the narrowing part 15 of the sample holding part 3, thereby, in embodiments, further improve the fitting of the sample holding part 3 to the base part 30.

The first base part 30,30a may further be configured to facilitate functional coupling to a second base part 30,30b, especially wherein the second base part 30,30b comprises a goniometer base or goniometer head 61, especially a goniometer base, or especially a goniometer head. The first base part 30a may also be indicated as base part; the second base part 30b may also be indicated as base part adapter. In particular, the first base part 30,30a may comprise a second (internal) connection structure configured for functional coupling to a base part adapter or goniometer head. In particular, the base part(s) 30 may be configured such that the rim of the sample holding part 3 physically contacts the base part adapter or goniometer head 61, thereby fixing a distance between the base part adapter or goniometer head and the target location of the crystal 20.

In a further aspect, the invention may further provide the (first) base part 30,30a as such. In particular, the invention may provide a base part 30 and a sample holding part 3, wherein the base part 30 has an internal connection structure 33 having a depth d_{d} and an internal diameter D1, and wherein the sample holding part 3 has an external connection structure 13 comprising a rim arranged at the first tube end, wherein the rim has a height h and an external diameter D2, wherein h/dd is selected from the range of 0.98 - 1.02, especially from the range of 0.99 - 1.01, such as wherein h=dd, and wherein D2/D1 is selected from the range of 0.98 - 1, especially from the range of 0.99 - 1, including 1.

The first base part and the second base part may be configured such that they can be attached to each other and detached from each other, and such, that in an attached state, they are configured fixated. For instance, male-female connections may be applied, and/or other connections known in the art. The second base part or base part adapter may be configured such that it can be attached to a goniometer hand and detached therefrom, and such that in an attached state, they are configured fixated. For instance, male-female connections, and/or other connections known in the art, may be applied.

The term "plurality" refers to two or more. Furthermore, the terms "a plurality of' and "a number of' may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment", and similar terms, may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The term "controlling" and similar terms herein especially refer at least to determining the behavior or supervising the running of an element, such as a unit. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system (also: "controller"). The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sample holder arrangement (1) comprising (a) a sample holding part (3) and (b) a base part (30), wherein:
- the sample holding part (3) comprises an open-ended tube (10), wherein the open-ended tube (10) comprises a first tube end (11) and a second tube end (19), wherein the open-ended tube (10) comprises a narrowing part (15), wherein in the narrowing part (15) an internal tube dimension reduces in a direction from the first tube end (11) to the second tube end (19), wherein a single crystal of a porous framework (20) is arranged within the open-ended tube (10) between the first tube end (11) and the second tube end (19), wherein dimensions of the narrowing part (15) and dimensions of the single crystal of the porous framework (20) are chosen such that the single crystal of the porous framework (20) cannot escape from the open-ended tube (10) via the second tube end (19); and
- the base part (30) is configured to host the sample holding part (3), wherein the sample holding part (3) is detachably associated to the base part (30).

2. The sample holder arrangement (1) according to claim 1, wherein the open-ended tube (10) comprises a tube wall (18) defining the open-ended tube (10), and a length (LI), wherein the tube wall (18) has a tapering shape, wherein the internal tube dimension reduces in a direction from the first tube end (11) to the second tube end (19) and wherein an external tube dimension reduces in a direction from the first tube end (11) to the second tube end (19).

3. The sample holder arrangement (1) according to claim 2, wherein the single crystal of the porous framework (20) has a smallest circularly equivalent crystal diameter dc, wherein the first tube end (11) has a first circularly equivalent inner diameter d1, and wherein the second tube end (19) has a second circularly equivalent inner diameter d2, wherein d1>dc>d2; wherein the tube wall (18) has a thickness (dt) selected from the range of 1 - 50 µm, and wherein the length L1 is selected from the range of 10 - 25 mm; and wherein the single crystal of the porous framework (20) is arranged at a distance d31 from the first tube end (11) and at a distance d32 from the second tube end (19), wherein d31 ≥ 5 mm, and wherein d32 ≥ 5 mm; wherein the narrowing part (15) has a conical shape (153).

4. The sample holder arrangement (1) according to any one of the preceding claims, wherein the open-ended tube (10) comprises a tube material selected from the group comprising a glass, a low X-ray absorption glass, a low X-ray absorption metal, quartz, and a polymeric material, wherein the polymeric material is selected from the group comprising polyimide, polypropylene, polyethylene, polyvinylidene difluoride, polychlorotrifluoroethylene, polymethylpentene, and polytetrafluoroethylene; wherein the single crystal of the porous framework (20) comprises a metal-organic framework material (21), wherein the metal-organic framework material (21) is formed of a metal salt ZnX₂ where X = Cl or Br or I.

5. The sample holder arrangement (1) according to any one of the preceding claims, wherein the sample holding part (3) and the base part (30) comprise different materials.

6. The sample holder arrangement (1) according to any one of the preceding claims, wherein the open-ended tube (10) comprises a second narrowing part (25), wherein the second narrowing part (25) is arranged between the single crystal of the porous framework (20) and the first tube end (11), wherein the second narrowing part (25) is dimensioned such that the single crystal of the porous framework (20) cannot escape through the second narrowing part (25).

7. The sample holder arrangement (1) according to any one of the preceding claims, wherein the open-ended tube (10) is configured detachable to the base part (30) and wherein in an attached configuration, the open-ended tube (10) is fixated in the base part (30); wherein the base part (30) is configured attachable to a goniometer head of an X-ray system (5).

8. The sample holder arrangement (1) according to any one of the preceding claims, wherein the sample holder arrangement (1) comprises a cap (40), wherein the cap (40) has a bottom side (41) configured to be arranged on a container (50) and a top side (42), wherein the cap (40) comprises a septum (45), wherein the open-ended tube (10) is arranged through the septum (45) such that the first tube end (11) is arranged at the top side (42) and such that the second tube end (19) is arranged at the bottom side (41); wherein the open-ended tube (10) is configured for piercing the cap (40) for a container (50); wherein the cap (40) comprises a screw cap or a crimp cap.

9. An open-ended tube (10) comprising a first tube end (11) and a second tube end (19), wherein the open-ended tube (10) comprises a narrowing part (15), wherein in the narrowing part (15) an internal tube dimension reduces in a direction from the first tube end (11) to the second tube end (19), wherein a single crystal of a porous framework (20) is arranged within the open-ended tube (10) between the first tube end (11) and the second tube end (19), wherein dimensions of the narrowing part (15) and dimensions of the single crystal of the porous framework (20) are chosen such that the single crystal of the porous framework (20) cannot escape from the open-ended tube (10) via the second tube end (19), wherein the single crystal of the porous framework (20) is arranged at a distance d31 from the first tube end (11) and at a distance d32 from the second tube end (19), wherein d31 ≥ 5 mm, and wherein d32 ≤ 5 mm.

10. The open-ended tube (10) according to claim 9, wherein the open-ended tube (10) comprises a tube wall (18) defining the open-ended tube (10), and a length L1, wherein the tube wall (18) has a tapering shape, wherein the internal tube dimension reduces in a direction from the first tube end (11) to the second tube end (19) and wherein an external tube dimension reduces in a direction from the first tube end (11) to the second tube end (19).

11. The open-ended tube (10) according to claim 10, wherein the open-ended tube (10) comprises a polymeric tube material selected from the group comprising polyimide, polypropylene, polyethylene, polyvinylidene difluoride, polychlorotrifluoroethylene, polymethylpentene, and polytetrafluoroethylene, and wherein the open-ended tube comprises a second narrowing part (25), wherein the second narrowing part (25) is arranged between the single crystal of the porous framework (20) and the first tube end (11), wherein the second narrowing part (25) is dimensioned such that the single crystal of the porous framework (20) cannot escape through the second narrowing part (25); wherein the tube wall (18) has a thickness (dt) selected from the range of 1 - 50 µm, and wherein the length L1 is selected from the range of 10 - 25 mm.

12. A sample preparation method for preparing a sample (6) with the sample holder arrangement (1) according to any one of the claims 1-8, the method comprising: (i) a first preparation stage comprising arranging the second tube end (19) in a solvent (100) in a container (50) comprising an analyte (110) for at least 10 minutes to introduce the analyte (110) into the single crystal of the porous framework (20); and (ii) a second preparation stage comprising removing the second tube end (19) from the solvent (100).

13. The sample preparation method according to claim 12, wherein the first preparation stage comprises providing the second tube end (19) through a septum (45) of a cap closing the container (50); wherein the solvent (100) comprises a polar or non-polar solvent, and wherein the analyte comprises an organic molecule; wherein the sample preparation method further comprising a stage of slowly evaporating the solvent (100) with a rate of 0.1 to 1000 µl/24 hours either through the open-ended tube (10) and/or via another opening in the container (50).

14. An X-ray analysis method, wherein the X-ray analysis method comprises: (a) the sample preparation method according to any one of the preceding claims 12-13; and (b) an X-ray stage comprising subjecting the sample (6) to single crystal X-ray analysis to provide an X-ray signal.

15. A system (2) comprising (i) a solvent container (50) and (ii) a sampler (200), wherein the solvent container (50) is configured to host a solvent (100) comprising an analyte (110), and wherein the system (2) has an operational mode comprising:
- a first preparation stage comprising: the sampler (200) arranging the second tube end (19) of the sample holder arrangement (1) according to any one of the preceding claims 1-8 in the solvent (100) for at least 10 minutes to introduce the analyte (110) into the single crystal of the porous framework (20); and
- a second preparation stage comprising: the sampler (200) removing the second tube end (19) from the solvent (100).

16. The system (2) according to claim 15, wherein the second preparation stage further comprises evaporating the solvent (100) from the open-ended tube (10).

17. The system (2) according to any one of the claims 15-16, wherein the system (2) further comprises an X-ray system (5), and wherein the operational mode further comprises:
- an X-ray stage comprising: the sampler (200) providing the sample holder arrangement (1) to the X-ray system (5), and the X-ray system (5) subjecting the sample (6) to single crystal X-ray analysis to provide an X-ray signal.
